# EUROPEAN PATENT APPLICATION

(11) **EP 4 697 846 A1**
(43) Date of publication of application: **18.02.2026**
(21) Application number: 24806541.9
(22) Date of filing: 13.05.2024
(51) Int. Cl.: H04W 74/08

(54) **TRANSMISSION METHOD AND COMMUNICATION APPARATUS**

(30) Priority: 14.05.2023 CN 202310544177
(71) Applicant: Huawei Technologies Co., Ltd., Shenzhen, Guangdong 518129 (CN)
(72) Inventor: HAN, Chengcheng, Shenzhen, Guangdong 518129 (CN); GUO, Zhiheng, Shenzhen, Guangdong 518129 (CN); LONG, Yi, Shenzhen, Guangdong 518129 (CN); XIE, Xinqian, Shenzhen, Guangdong 518129 (CN)
(74) Representative: MERH-IP Matias Erny Reichl Hoffmann Patentanwälte PartG mbB
(86) International application number: PCT/CN2024/092836
(87) International publication number: WO 2024/235190

(57) **Abstract**

A transmission method and a communication apparatus are provided. The transmission method includes: receiving an SSB and PRACH resource configuration information; determining time-frequency positions of a plurality of ROs in an RO group based on the SSB, the PRACH resource configuration information, and an RO frequency hopping manner in the RO group, where the RO group includes a plurality of ROs in time domain, and the plurality of ROs in the RO group correspond to different time domain positions; and the RO frequency hopping manner in the RO group includes: performing no frequency hopping on ROs belonging to a same slot in the RO group, or performing frequency hopping on ROs not belonging to a same slot using a frequency hopping step; or performing no frequency hopping on ROs belonging to a plurality of adjacent slots in the RO group, or performing frequency hopping on ROs not belonging to a plurality of adjacent slots using a frequency hopping step; and sending a preamble (preamble) separately on the plurality of ROs included in the RO group based on the time-frequency positions of the plurality of ROs in the RO group.

## Description

This application claims priority to Chinese Patent Application No. 202310544177.7, filed with the China National Intellectual Property Administration on May 14, 2023 and entitled "TRANSMISSION METHOD AND COMMUNICATION APPARATUS", which is incorporated herein by reference in its entirety.

### TECHNICAL FIELD

This application relates to the field of communication, and more specifically, to a transmission method and a communication apparatus.

### BACKGROUND

Currently, to improve a probability that a network device receives a preamble (preamble) sent by a terminal device, and improve preamble detection performance, repeated sending of the preamble is being discussed. For example, a plurality of random access occasions (RACH occasion, RO) corresponding to a same synchronization signal block (synchronization signal block, SSB) index (index) form a group, which is referred to as an RO group (group). The RO may be understood as a time-frequency resource used by the terminal device to send the preamble. Different ROs in one RO group correspond to different time domain positions. The terminal device may repeatedly send the preamble on a plurality of ROs in one RO group in a frequency hopping manner, to improve the preamble detection performance.

However, although a frequency diversity gain can be obtained by sending the preamble in the RO group in the RO frequency hopping manner, for a plurality of ROs in a same RO group, a plurality of ROs belonging to a same slot may be located at different frequency positions. Consequently, when the terminal device sends the preamble repeatedly (that is, sends the preamble repeatedly) using the RO group, preambles received by the network device on different ROs experience different channels and phase jumps. As a result, coherent combination effects of received preamble sequences on the plurality of ROs in the same slot are poor, and coherent detection performance deteriorates.

### SUMMARY

This application provides a transmission method and a communication apparatus, to improve preamble transmission and detection efficiency by combining a frequency hopping gain and a coherent detection gain when a preamble is transmitted separately using a plurality of ROs in an RO group.

According to a first aspect, a transmission method is provided. The method may be performed by a terminal device, or may be performed by a chip, a chip system, a processor, or the like that supports a terminal device in implementing the method. The method includes: receiving an SSB and PRACH resource configuration information; determining time-frequency positions of a plurality of ROs in an RO group based on the SSB, the PRACH resource configuration information, and an RO frequency hopping manner in the RO group, where the RO group includes a plurality of ROs in time domain, the plurality of ROs in the RO group correspond to different time domain positions, and the RO frequency hopping manner in the RO group includes performing frequency hopping with an RO bundle as a frequency hopping granularity using a frequency hopping step, where the RO bundle includes a plurality of ROs in time domain, and the plurality of ROs in the RO bundle correspond to a same frequency position; and sending a preamble (preamble) separately on the plurality of ROs in the RO group based on the time-frequency positions of the plurality of ROs in the RO group.

According to the transmission method provided in the first aspect, when the terminal device sends the preamble separately (or sends the preamble repeatedly) on the plurality of ROs in the RO group, when the terminal device sends the preamble separately (or sends the preamble repeatedly) on the plurality of ROs in the RO group, frequency hopping is performed in the RO group with the RO bundle as the frequency hopping granularity (or a frequency hopping unit) using the frequency hopping step. The RO bundle may include a plurality of ROs in time domain, and the plurality of ROs in the RO bundle correspond to a same frequency position. After the network device receives the preamble separately at the time-frequency positions of the plurality of ROs in the RO group, because preambles in one RO bundle experience a same (close) channel and phase jump, coherent combination may be first performed on preamble sequences transmitted on ROs in one RO bundle, where coherent combination can improve average power of a to-be-detected sequence; and then a combined sequence is used for detection, to improve a preamble detection success probability. Frequency hopping may be performed on preamble sequences transmitted on different RO bundles. Frequency hopping can reduce a probability that all channels for repeated preamble transmission are in deep fading (that is, not in deep fading). Therefore, a frequency diversity (diversity) gain can be improved. In other words, a frequency hopping gain and a coherent detection gain are combined.

In a possible implementation of the first aspect, the RO bundle corresponds to (belongs to) a same slot or a plurality of adjacent slots in time domain. In other words, a plurality of ROs in a same slot correspond to a same frequency domain position (that is, no frequency hopping is performed), or ROs in a plurality of adjacent slots correspond to a same frequency domain position (that is, no frequency hopping is performed). In this implementation, because the RO bundle corresponds to (belongs to) the same slot or the plurality of adjacent slots in terms of time (or in time domain), that is, no frequency hopping is performed on ROs in a same slot or a plurality of adjacent slots, after the terminal device sends the preamble on each RO in this manner, and the network device receives the preamble, preambles in a same slot or adjacent slots experience a same (close) channel and phase jump. Therefore, coherent combination may be performed on preamble sequences in a same slot or adjacent slots (the adjacent slots correspond to close channels), to improve preamble detection power. Frequency hopping may be performed on preamble sequences in different slots or non-adjacent slots t, to improve the frequency diversity (diversity) gain and avoid deep fading.

For example, the RO bundle corresponds to two or three adjacent slots in time domain.

For example, the same slot or the plurality of adjacent slots may be understood as a same PRACH slot or a plurality of adjacent PRACH slots. The plurality of adjacent slots may be understood as that sequence numbers of the plurality of slots are adjacent or consecutive.

In a possible implementation of the first aspect, a quantity of ROs included in the RO bundle in time domain includes any one of 2, 3, 4, 5, 6, or 7. Alternatively, a quantity set or range of ROs included in the RO bundle in time domain is 2, 3, 4, 5, 6, and 7.

For example, the RO bundle may include an odd quantity of ROs (for example, 3, 5, or 7) in time domain, or in other words, frequency hopping may be performed using the odd quantity of ROs as a whole.

In a possible implementation of the first aspect, if a time domain resource occupied by an (i+1)^{th} RO in the RO group and a time domain resource occupied by an i^{th} RO in the RO group belong to a same slot or adjacent slots, the i^{th} RO and the (i+1)^{th} RO in the RO group correspond to a same frequency domain position, where a value of i is a positive integer; or if a time domain resource occupied by an (i+1)^{th} RO in the RO group and a time domain resource occupied by an i^{th} RO in the RO group do not belong to a same slot or do not belong to adjacent slots, frequency hopping is performed on the (i+1)^{th} RO in the RO group relative to the i^{th} RO based on the frequency hopping step. In this implementation, whether frequency hopping needs to be performed on the RO in the RO group is determined in the foregoing manner, so that it can be ensured that no frequency hopping is performed on ROs in a same slot or a plurality of adjacent slots. In addition, frequency hopping needs to be performed on ROs in different slots or non-adjacent slots. Therefore, the following can be implemented: Coherent combination may be performed on preamble sequences in a same slot or adjacent slots (the adjacent slots correspond to close channels), to improve the preamble detection power. Frequency hopping may be performed on preamble sequences in a same slot or non-adjacent slots (that is, frequency hopping may be performed on preamble sequences transmitted on different RO bundles), to improve the frequency diversity (diversity) gain.

According to a second aspect, a transmission method is provided. The method may be performed by a terminal device, or may be performed by a chip, a chip system, a processor, or the like that supports a terminal device in implementing the method. The method includes: receiving an SSB and PRACH resource configuration information; determining time-frequency positions of a plurality of ROs in an RO group based on the SSB, the PRACH resource configuration information, and an RO frequency hopping manner in the RO group, where the RO group includes a plurality of ROs in time domain, and the plurality of ROs in the RO group correspond to different time domain positions; and the RO frequency hopping manner in the RO group includes: performing no frequency hopping on ROs belonging to a same slot in the RO group, or performing frequency hopping on ROs not belonging to a same slot using a frequency hopping step; or performing no frequency hopping on ROs belonging to a plurality of adjacent slots in the RO group, or performing frequency hopping on ROs not belonging to a plurality of adjacent slots using a frequency hopping step; and sending a preamble separately on the plurality of ROs included in the RO group based on the time-frequency positions of the plurality of ROs in the RO group.

According to the transmission method provided in the second aspect, when the terminal device sends the preamble separately (or sends the preamble repeatedly) on the plurality of ROs in the RO group, no frequency hopping is performed on ROs belonging to a same slot in the RO group, or frequency hopping is performed on ROs not belonging to a same slot using the frequency hopping step; or no frequency hopping is performed on ROs belonging to a plurality of adjacent slots in the RO group, or frequency hopping is performed on ROs not belonging to a plurality of adjacent slots using the frequency hopping step. In other words, preambles in a same slot or adjacent slots experience a same (close) channel and phase jump. Therefore, after the network device receives the preamble separately at the time-frequency positions of the plurality of ROs in the RO group, coherent combination may be first performed on preamble sequences in a same slot or adjacent slots (the adjacent slots correspond to close channels), and then a combined sequence is used for detection, to improve a preamble detection success probability. Frequency hopping may be performed on preamble sequences in different slots or non-adjacent slots. Frequency hopping can reduce a probability that all channels for repeated preamble transmission are in deep fading (that is, not in deep fading). Therefore, a frequency diversity (diversity) gain can be improved. In other words, a frequency hopping gain and a coherent detection gain are combined.

For example, the plurality of adjacent slots include two or three adjacent slots.

In a possible implementation of the first aspect or the second aspect, the frequency hopping step includes an integer multiple of a frequency domain resource size occupied by one RO in frequency domain, and a value of the frequency hopping step includes any one of 1, 2, 3, 4, 5, 6, or 7.

In a possible implementation of the first aspect or the second aspect, if the time domain resource occupied by the (i+1)^{th} RO in the RO group and the time domain resource occupied by the i^{th} RO in the RO group do not belong to a same slot or do not belong to adjacent slots, a frequency domain position S of the (i+1)^{th} RO in the RO group after frequency hopping satisfies the following formula:
S = (the frequency domain position of the i^{th} RO in the RO group + a frequency domain resource length corresponding to the frequency hopping step) mod (a total frequency domain resource length for a plurality of frequency domain multiplexed ROs), where the value of i is a positive integer, and mod represents a modulo operation. In this implementation, efficiency and accuracy of determining the frequency domain position of the Ro after frequency hopping can be improved.

In a possible implementation of the first aspect or the second aspect, if the time domain resource occupied by the (i+1)^{th} RO in the RO group and the time domain resource occupied by the i^{th} RO in the RO group do not belong to a same slot or do not belong to adjacent slots, a frequency division multiplexing sequence number W of the (i+1)^{th} RO in the RO group after frequency hopping may be determined according to the following formula:
W = (a frequency division multiplexing sequence number of the i^{th} RO in the RO group + a quantity of ROs corresponding to the frequency hopping step) mod (a quantity of frequency domain multiplexed ROs), where the value of i is a positive integer, mod represents a modulo operation, and the frequency division multiplexing sequence number indicates that a frequency position of a specific RO corresponds to which FDM-RO among all frequency division multiplexed ROs at a same time point. In this implementation, the efficiency and the accuracy of determining the frequency domain position of the Ro after frequency hopping can be improved.

In a possible implementation of the first aspect or the second aspect, the RO frequency hopping manner in the RO group is predefined in a protocol. For example, the frequency hopping step and a time-frequency resource size corresponding to the RO bundle are predefined in the protocol, or the frequency hopping step is predefined in the protocol.

In a possible implementation of the first aspect or the second aspect, the method further includes: receiving indication information, where the indication information indicates an identifier of the RO frequency hopping manner in the RO group; and determining the RO frequency hopping manner in the RO group based on the identifier of the RO frequency hopping manner in the RO group. In this implementation, the network device may indicate the identifier of the RO frequency hopping manner in the RO group to the terminal device, to improve efficiency and accuracy of determining the RO frequency hopping manner in the RO group by the terminal device.

In a possible implementation of the first aspect or the second aspect, the method further includes: receiving indication information, where the indication information indicates at least one of the frequency hopping step or the time-frequency resource size corresponding to the RO bundle; and determining the RO frequency hopping manner in the RO group based on the indication information. In this implementation, efficiency and accuracy of determining the RO frequency hopping manner in the RO group by the terminal device can be improved.

In a possible implementation of the first aspect or the second aspect, the indication information indicates the frequency hopping step, and a length of the indication information is 1 bit, 2 bits, or 3 bits. In this implementation, the frequency hopping step can be indicated with low signaling overheads, saving communication resources.

In a possible implementation of the first aspect or the second aspect, the length of the indication information is 1 bit, the indication information indicates performing frequency hopping using the frequency hopping step whose value is 1 or 7, or performing no frequency hopping, and the value of the frequency hopping step represents a multiple of the frequency domain resource size occupied by one RO in frequency domain. In this implementation, on one hand, the frequency hopping step can be indicated with low signaling overheads, and on the other hand, a high frequency diversity (diversity) gain can be obtained.

According to a third aspect, a transmission method is provided. The method may be performed by a network device, may be performed by a chip, a chip system, or a processor that supports a network device in implementing the method, or may be performed by a logical node, a logical module, software, or the like that can implement all or a part of functions of a network device. The method includes: sending an SSB and PRACH resource configuration information; determining time-frequency positions of a plurality of ROs in an RO group using an RO frequency hopping manner in the RO group, where the RO group includes a plurality of ROs in time domain, the plurality of ROs in the RO group correspond to different time domain positions, and the RO frequency hopping manner in the RO group includes performing frequency hopping with an RO bundle as a frequency hopping granularity using a frequency hopping step, where the RO bundle includes a plurality of ROs in time domain, and the plurality of ROs in the RO bundle correspond to a same frequency position; and receiving, separately on the plurality of ROs included in the RO group based on the time-frequency positions of the plurality of ROs in the RO group, a preamble in response to the SSB and the PRACH resource configuration information.

According to the transmission method provided in the third aspect, when the preamble is received separately (or the preamble is received repeatedly) on the plurality of ROs in the RO group, frequency hopping is performed in the RO group with the RO bundle as the frequency hopping granularity (or a frequency hopping unit) using the frequency hopping step. The RO bundle may include a plurality of ROs in time domain, and the plurality of ROs in the RO bundle correspond to a same frequency position. Because preambles in one RO bundle experience a same (close) channel and phase jump, the network device may first perform coherent combination on preamble sequences transmitted on ROs in one RO bundle, where coherent combination can improve average power of a to-be-detected sequence; and then use a combined sequence for detection, to improve a preamble detection success probability. Frequency hopping may be performed on preamble sequences transmitted on different RO bundles. Frequency hopping can reduce a probability that all channels for repeated preamble transmission are in deep fading (that is, not in deep fading). Therefore, a frequency diversity (diversity) gain can be improved. In other words, a frequency hopping gain and a coherent detection gain are combined.

In a possible implementation of the third aspect, the RO bundle corresponds to (belongs to) a same slot or a plurality of adjacent slots in time domain.

For example, the same slot or the plurality of adjacent slots may be understood as a same PRACH slot or a plurality of adjacent PRACH slots.

For example, the RO bundle corresponds to two or three adjacent slots in time domain.

In a possible implementation of the third aspect, a quantity of ROs included in the RO bundle in time domain includes any one of 2, 3, 4, 5, 6, or 7. Alternatively, a quantity set or range of ROs included in the RO bundle in time domain is 2, 3, 4, 5, 6, and 7.

For example, the RO bundle may include an odd quantity of ROs (for example, 3, 5, or 7) in time domain, or in other words, frequency hopping may be performed using the odd quantity of ROs as a whole.

In a possible implementation of the third aspect, if a time domain resource occupied by an (i+1)^{th} RO in the RO group and a time domain resource occupied by an i^{th} RO in the RO group belong to a same slot or adjacent slots, the i^{th} RO and the (i+1)^{th} RO in the RO group correspond to a same frequency domain position, where a value of i is a positive integer; or if a time domain resource occupied by an (i+1)^{th} RO in the RO group and a time domain resource occupied by an i^{th} RO in the RO group do not belong to a same slot or do not belong to adjacent slots, frequency hopping is performed on the (i+1)^{th} RO in the RO group relative to the i^{th} RO based on the frequency hopping step.

According to a fourth aspect, a transmission method is provided. The method may be performed by a network device, may be performed by a chip, a chip system, or a processor that supports a network device in implementing the method, or may be performed by a logical node, a logical module, software, or the like that can implement all or a part of functions of a network device. The method includes: sending an SSB and PRACH resource configuration information; determining time-frequency positions of a plurality of ROs in an RO group using an RO frequency hopping manner in the RO group, where the RO group includes a plurality of ROs in time domain, the plurality of ROs in the RO group correspond to different time domain positions, the RO group includes a plurality of ROs in time domain, and the plurality of ROs in the RO group correspond to different time domain positions; and the RO frequency hopping manner in the RO group includes: performing no frequency hopping on ROs belonging to a same slot in the RO group, or performing frequency hopping on ROs not belonging to a same slot using a frequency hopping step; or performing no frequency hopping on ROs belonging to a plurality of adjacent slots in the RO group, or performing frequency hopping on ROs not belonging to a plurality of adjacent slots using a frequency hopping step; and receiving, separately on the plurality of ROs included in the RO group based on the time-frequency positions of the plurality of ROs in the RO group, a preamble in response to the SSB and the PRACH resource configuration information.

According to the transmission method provided in the fourth aspect, when the preamble is received separately (or the preamble is received repeatedly) on the plurality of ROs in the RO group, no frequency hopping is performed on ROs belonging to a same slot in the RO group, or frequency hopping is performed on ROs not belonging to a same slot using the frequency hopping step; or no frequency hopping is performed on ROs belonging to a plurality of adjacent slots in the RO group, or frequency hopping is performed on ROs not belonging to a plurality of adjacent slots using the frequency hopping step. In other words, preambles in a same slot or adjacent slots experience a same (close) channel and phase jump. Therefore, after the network device receives the preamble separately at the time-frequency positions of the plurality of ROs in the RO group, coherent combination may be first performed on preamble sequences in a same slot or adjacent slots (the adjacent slots correspond to close channels), and then a combined sequence is used for detection, to improve a preamble detection success probability. Frequency hopping may be performed on preamble sequences in different slots or non-adjacent slots. Frequency hopping can reduce a probability that all channels for repeated preamble transmission are in deep fading (that is, not in deep fading). Therefore, a frequency diversity (diversity) gain can be improved. In other words, a frequency hopping gain and a coherent detection gain are combined.

In a possible implementation of the third aspect or the fourth aspect, the frequency hopping step includes an integer multiple of a frequency domain resource size occupied by one RO in frequency domain, and a value of the frequency hopping step includes any one of 1, 2, 3, 4, 5, 6, or 7.

In a possible implementation of the third aspect or the fourth aspect, if the time domain resource occupied by the (i+1)^{th} RO in the RO group and the time domain resource occupied by the i^{th} RO in the RO group do not belong to a same slot or do not belong to adjacent slots, a frequency domain position S of the (i+1)^{th} RO in the RO group after frequency hopping satisfies the following formula:
S = (the frequency domain position of the i^{th} RO in the RO group + a frequency domain resource length corresponding to the frequency hopping step) mod (a total frequency domain resource length for a plurality of frequency domain multiplexed ROs), where the value of i is a positive integer, and mod represents a modulo operation. In this implementation, efficiency and accuracy of determining the frequency domain position of the Ro after frequency hopping can be improved.

In a possible implementation of the third aspect or the fourth aspect, if the time domain resource occupied by the (i+1)^{th} RO in the RO group and the time domain resource occupied by the i^{th} RO in the RO group do not belong to a same slot or do not belong to adjacent slots, a frequency division multiplexing sequence number W of the (i+1)^{th} RO in the RO group after frequency hopping may be determined according to the following formula:
W = (a frequency division multiplexing sequence number of the i^{th} RO in the RO group + a quantity of ROs corresponding to the frequency hopping step) mod (a quantity of frequency domain multiplexed ROs), where the value of i is a positive integer, mod represents a modulo operation, and the frequency division multiplexing sequence number indicates that a frequency position of a specific RO corresponds to which FDM-RO among all frequency division multiplexed ROs at a same time point. In this implementation, the efficiency and the accuracy of determining the frequency domain position of the Ro after frequency hopping can be improved.

In a possible implementation of the third aspect or the fourth aspect, the RO frequency hopping manner in the RO group is predefined in a protocol. For example, the frequency hopping step and a time-frequency resource size corresponding to the RO bundle are predefined in the protocol, or the frequency hopping step is predefined in the protocol.

In a possible implementation of the third aspect or the fourth aspect, the method further includes: sending indication information, where the indication information indicates an identifier of the RO frequency hopping manner in the RO group. In this implementation, efficiency and accuracy of determining the RO frequency hopping manner in the RO group by the terminal device can be improved.

In a possible implementation of the third aspect or the fourth aspect, the method further includes: sending indication information, where the indication information indicates at least one of the frequency hopping step or the time-frequency resource size corresponding to the RO bundle. In this implementation, efficiency and accuracy of determining the RO frequency hopping manner in the RO group by the terminal device can be improved.

In a possible implementation of the third aspect or the fourth aspect, the indication information indicates the frequency hopping step, and a length of the indication information is 1 bit, 2 bits, or 3 bits. In this implementation, the frequency hopping step can be indicated with low signaling overheads, saving communication resources.

In a possible implementation of the third aspect or the fourth aspect, the length of the indication information is 1 bit, the indication information indicates performing frequency hopping using the frequency hopping step whose value is 1 or 7, or performing no frequency hopping, and the value of the frequency hopping step represents a multiple of the frequency domain resource size occupied by one RO in frequency domain. In this implementation, on one hand, the frequency hopping step can be indicated with low signaling overheads, and on the other hand, a high frequency diversity (diversity) gain can be obtained.

According to a fifth aspect, a communication apparatus is provided. The apparatus includes a module (for example, including a processing module and an interface module) configured to perform each step in any one of the first aspect or the possible implementations of the first aspect, or a module (for example, including a processing module and an interface module) configured to perform each step in any one of the second aspect or the possible implementations of the second aspect. The apparatus may be a terminal device, or may be a chip, a chip system, a processor, or the like in a terminal device.

According to a sixth aspect, a communication apparatus is provided. The apparatus includes a module (for example, including a processing module and an interface module) configured to perform each step in any one of the third aspect or the possible implementations of the third aspect, or a module (for example, including a processing module and an interface module) configured to perform each step in any one of the fourth aspect or the possible implementations of the fourth aspect. The apparatus may be a network device, may be a chip, a chip system, a processor, or the like in a network device, or may be a logical node, a logical module, software, or the like that can implement all or a part of functions of a network device.

According to a seventh aspect, a communication apparatus is provided. The apparatus includes at least one processor and a memory. The at least one processor is configured to perform the method in any one of the first aspect or the possible implementations of the first aspect, or the method in any one of the second aspect or the possible implementations of the second aspect. The apparatus may be a terminal device, or may be a chip, a chip system, a processor, or the like in a terminal device.

According to an eighth aspect, a communication apparatus is provided. The apparatus includes at least one processor and a memory. The at least one processor is configured to perform the method in any one of the third aspect or the possible implementations of the third aspect, or the method in any one of the fourth aspect or the possible implementations of the fourth aspect. The apparatus may be a network device, may be a chip, a chip system, a processor, or the like in a network device, or may be a logical node, a logical module, software, or the like that can implement all or a part of functions of a network device.

According to a ninth aspect, a communication apparatus is provided. The apparatus includes at least one processor and an interface circuit. The at least one processor is configured to perform the method in any one of the first aspect or the possible implementations of the first aspect, or the method in any one of the second aspect or the possible implementations of the second aspect. The apparatus may be a terminal device, or may be a chip, a chip system, a processor, or the like in a terminal device.

According to a tenth aspect, a communication apparatus is provided. The apparatus includes at least one processor and an interface circuit. The at least one processor is configured to perform the method in any one of the third aspect or the possible implementations of the third aspect, or the method in any one of the fourth aspect or the possible implementations of the fourth aspect. The apparatus may be a network device, may be a chip, a chip system, a processor, or the like in a network device, or may be a logical node, a logical module, software, or the like that can implement all or a part of functions of a network device.

According to an eleventh aspect, a terminal device is provided. The terminal device includes the communication apparatus provided in the fifth aspect. Alternatively, the terminal device includes the communication apparatus provided in the seventh aspect. Alternatively, the terminal device includes the communication apparatus provided in the ninth aspect.

According to a twelfth aspect, a network device is provided. The network device includes the communication apparatus provided in the sixth aspect. Alternatively, the network device includes the communication apparatus provided in the eighth aspect. Alternatively, the network device includes the communication apparatus provided in the tenth aspect.

According to a thirteenth aspect, a computer program product is provided. The computer program product includes a computer program. When being executed by a processor, the computer program is used to perform the method in any one of the first aspect to the fourth aspect or any possible implementation of any one of the first aspect to the fourth aspect.

According to a fourteenth aspect, a computer-readable storage medium is provided. The computer-readable storage medium stores a computer program. When being executed, the computer program is used to perform the method in any one of the first aspect to the fourth aspect or any possible implementation of any one of the first aspect to the fourth aspect.

According to a fifteenth aspect, a communication system is provided. The communication system includes the terminal device and the network device.

According to a sixteenth aspect, a chip is provided. The chip includes a processor, configured to invoke a computer program from a memory and run the computer program, so that a communication device on which the chip is installed performs the method in any one of the first aspect to the fourth aspect or any possible implementation of any one of the first aspect to the fourth aspect.

### BRIEF DESCRIPTION OF DRAWINGS

FIG. 1 is a schematic flowchart of an example of a contention based random access process;
FIG. 2 is a diagram of an example of a mapping relationship between an SSB and a preamble when two SSBs correspond to one RO (one RO has two SSBs);
FIG. 3 is a diagram of an example of a PRACH resource;
FIG. 4 is a diagram of an example of a PRACH resource in time domain;
FIG. 5 is a diagram of an example of a PRACH resource in frequency domain;
FIG. 6 is a diagram of an example of an association relationship between an SSB and an RO;
FIG. 7 is a diagram of an example of an RO-to-SSB mapping process (mapping relationship);
FIG. 8 is a diagram of an example of an RO group;
FIG. 9 is a diagram of another example of an RO group;
FIG. 10 is a diagram of an example of an RO frequency hopping manner in an RO group according to an embodiment of this application;
FIG. 11 is a diagram of another example of an RO frequency hopping manner in an RO group according to an embodiment of this application;
FIG. 12 is a diagram of still another example of an RO frequency hopping manner in an RO group according to an embodiment of this application;
FIG. 13 is a diagram of an example of a communication system applicable to embodiments of this application according to an embodiment of this application;
FIG. 14 is a diagram of an example of interaction in a transmission method according to an embodiment of this application;
FIG. 15 to FIG. 27 are diagrams of an RO frequency hopping pattern (or referred to as frequency hopping manner) in an RO group according to an embodiment of this application;
FIG. 28 is a diagram of an example of interaction in a transmission method according to an embodiment of this application;
FIG. 29 to FIG. 32 are diagrams of an RO frequency hopping pattern (or referred to as frequency hopping manner) in an RO group according to an embodiment of this application;
FIG. 33 is a schematic block diagram of an example of a communication apparatus according to an embodiment of this application;
FIG. 34 is a schematic block diagram of another example of a communication apparatus according to an embodiment of this application;
FIG. 35 is a schematic block diagram of an example of a communication apparatus according to an embodiment of this application;
FIG. 36 is a schematic block diagram of another example of a communication apparatus according to an embodiment of this application; and
FIG. 37 is a schematic block diagram of a terminal device according to an embodiment of this application.

### DESCRIPTION OF EMBODIMENTS

The following describes technical solutions of this application with reference to accompanying drawings.

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features. In the descriptions of embodiments, unless otherwise specified, "a plurality of" means two or more.

In embodiments of this application, a terminal device or a network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to a magnetic storage component (for example, a hard disk drive, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable medium" may include but is not limited to a radio channel, and various other media that can store, contain, and/or carry instructions and/or data.

Several related technologies in embodiments of this application are briefly described first.

First: synchronization signal block (synchronization signal block, SSB), or referred to as a synchronization signal (synchronization signal, SS)/physical broadcast channel block (physical broadcast channel block, PBCH block): is a signal structure. A PBCH includes most basic system information such as a system frame number and intra-frame timing information. The synchronization signal block includes a primary synchronization signal (Primary Synchronization Signal, PSS), a secondary synchronization signal (Secondary Synchronization Signal, SSS), and the physical broadcast channel (Physical Broadcast Channel, PBCH). The PSS and the SSS are mainly used to help a terminal device identify a cell and perform synchronization with the cell. The PBCH includes the most basic system information such as the system frame number and the intra-frame timing information. Successful receiving of the synchronization signal block by the terminal device is a prerequisite for accessing the cell by the terminal device. For example, the terminal device correctly receives a master system information block (master information block, MIB) carried on the PBCH, obtains configuration information that is included in the MIB and that is required for interpreting a system information block type 1 (system information block Type 1, SIB1) message, and obtains a SIB1 based on configuration information corresponding to the SIB1. The SIB1 may include configuration information required for the terminal device to access a system. The terminal device may implement system access, cell selection, uplink synchronization, and the like based on the SIB1.

The SSB is configured using a bitmap (Bitmap). The bitmap may include a short bitmap (short Bitmap), a medium bitmap (medium Bitmap), or a long bitmap (long Bitmap). A first bit in the bitmap corresponds to an SSB index 0 (SS/PBCH block index 0), a second bit corresponds to an SS/PBCH block index 1, and so on. When a value of a bit in the bitmap is 0, it indicates that a network device (for example, a base station) does not send an SSB corresponding to a corresponding SS/PBCH block index; or when a value of a bit in the bitmap is 1, it indicates that a network device sends an SSB corresponding to a corresponding SS/PBCH block index. A quantity ${N}_{{T}_{x}}^{SSB}$ of SSBs actually sent by the network device is determined using the bitmap.

### Second: random access process

In a communication system, a terminal device needs to obtain uplink synchronization using a random access process, to access a network for communication. Random access includes contention based (contention based, CB) random access and non-contention based random access. Non-contention based access is usually performed when the terminal device can successfully receive radio resource control (radio resource control, RRC) signaling. The following describes a random access procedure by using a contention based random access procedure as an example.

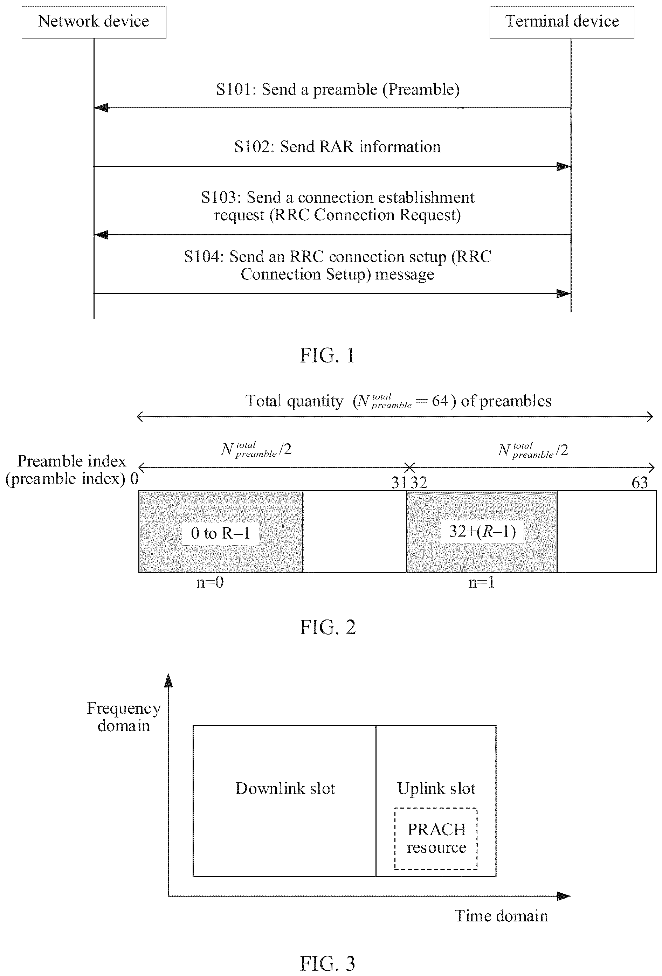

FIG. 1 is a schematic flowchart of an example of a contention based random access process. As shown in FIG. 1, the procedure includes S101 to S104.

S101: The terminal device sends a preamble (preamble) to a network device.

In S101, after selecting an SSB index, the terminal device determines, based on a system message sent by the network device and the selected SSB index (each SSB corresponds to one beam (for example, a millimeter-wave beam), and the terminal device may select an SSB with maximum SSB received power (that is, select a beam with maximum SSB received power) from a plurality of received SSBs, and use an index of the SSB with the maximum received power as the selected SSB index; and this process may be referred to as SSB index selection by the terminal device), a random access occasion (RACH occasion, RO) associated with the SSB index. The RO may be understood as a time-frequency resource used by the terminal device for random access (that is, for preamble sending). The network device preconfigures an association relationship (a mapping relationship) between an RO and an SSB index. An RO is selected from the RO associated with the SSB index for preamble sending. For example, the preamble (preamble) may be referred to as a random access message 1 (Msg1). After determining the time-frequency resource (RO), the terminal device selects one preamble sequence on the selected RO (a maximum of 64 preambles can be transmitted simultaneously on one RO, and the terminal device selects one preamble sequence from the 64 preamble sequences), and sends the preamble sequence to the network device. The preamble sequence is carried on a physical random access channel (physical random access channel, PRACH).

The following briefly describes why an association relationship may exist between an RO and an SSB index and between an SSB and a preamble.

Because a beam (for example, including a millimeter-wave beam) is used in the random access process, the network device has a plurality of opportunities to send an SSB in a time domain cycle of the SSB. In addition, each SSB has a corresponding number, and each SSB corresponds to a different beam (each SSB is sent using a different beam). For the terminal device, the terminal device has an opportunity to send the preamble only when a beam scanning signal of the SSB covers the terminal device. When receiving the preamble sent by the terminal device, the network device may learn of an optimal downlink beam. In other words, the network device knows which beam points to the terminal device. Therefore, the SSB needs to be associated with the preamble (that is, there is an association relationship or a mapping relationship). The preamble can be sent only on a RACH occasion. Therefore, the SSB is associated with the RACH occasion, that is, there is an association relationship.

S102: After receiving the preamble, the network device sends random access response (random access response, RAR) information to the terminal device. A RAR may also be referred to as a random access message 2 (Msg2). The RAR includes scheduling information of a random access message 3 (Msg3) and the like.

S103: After receiving the RAR, the terminal device sends a connection establishment request (RRC Connection Request) to the network device. The connection establishment request may also be referred to as the random access message 3 (Msg3). The connection establishment request is carried on a physical uplink shared channel (physical uplink shared channel, PUSCH) PUSCH channel.

S104: After receiving the connection establishment request, the network device sends an RRC connection setup (RRC Connection Setup) message to the terminal device. The RRC connection setup message may also be referred to as a random access message 4 (Msg4). The Msg4 is mainly for conflict resolution. When a plurality of terminal devices perform access simultaneously, which terminal to select for access in current random access needs to be determined.

Optionally, after receiving the RRC connection setup (RRC Connection Setup) message, the terminal device may further send an RRC connection setup complete (RRC Connection Setup Complete) message to the network device.

Based on the foregoing descriptions, in a random access process of wireless communication, if the terminal device sends the preamble using only one RO, because wireless transmission has a significant loss and is vulnerable to an environment, when the terminal device is far away from the network device and/or an ambient environment is unfavorable for millimeter-wave transmission, there is a high probability that power of the preamble received by the network device is less than an expected value. Consequently, the terminal device cannot reliably access the network. To address this problem, in a related technology, a same quantity of RO resources that can be used to repeatedly send a preamble are configured for all SSBs (that is, different SSB indexes correspond to a same quantity of RO resources), and all the terminal devices are allowed to repeatedly send a preamble on RO resources that can be used to repeatedly send a preamble and that correspond to a selected SSB for a quantity of times less than or equal to a same maximum quantity of repeated sending times, to improve preamble received power and improve a coverage capability. However, in this technology, a difference between coverage capabilities of millimeter-wave beams is not distinguished, and the manner of evenly configuring RO resources for all beams cannot fully use the RO resources to improve the coverage capability.

### Third: RO

The RO is configured by a network device. For example, the network device may configure the RO using "PRACH configuration index" signaling.

In time domain, a PRACH configuration cycle (or referred to as a PRACH resource configuration cycle) may be 10 ms, 20 ms, 40 ms, 80 ms, or 160 ms. In one configuration cycle, which slots (slot) may have ROs, how many slots (that is, PRACH slots) include ROs, and how many ROs are included in one PRACH slot, and the like are all obtained based on the "PRACH configuration index" signaling.

In frequency domain, the network device may further configure a quantity of ROs in frequency domain. For example, the network device may configure the quantity of ROs in frequency domain using "msg1-FDM" signaling, and a value set of the "msg1-FDM" signaling may be {1, 2, 4, 8}. For example, msg1-FDM=4 indicates that there are four frequency domain PRACH occasions on one time domain RACH occasion.

The RO may be classified as a valid RO (valid RO) or an invalid RO, which is specifically determined according to a rule. For example, only an RO at a time domain distance (gap) from an SSB is a valid RO. Unless otherwise specified, all ROs in the following descriptions are valid ROs.

### Fourth: preamble (preamble)

It can be learned from the foregoing descriptions that there is also an association relationship (a mapping relationship) between an SSB and a preamble. Each SSB corresponds to a same quantity of contention based (contention based, CB) preambles, for example, R, that is, R preambles with consecutive indexes are mapped to one SSB. A value of R is configured by a network device. For example, the network device may configure the value of R using "CB-preamblesPerSSB" signaling.

For example, if one SSB corresponds to one RO (one RO has one SSB), a start preamble index (preamble index) corresponding to the SSB is 0, that is, preamble indexes are 0 to R-1. If N SSBs correspond to one RO, a start preamble index corresponding to an SSB index n (that is, an SSB whose index is n) is $n ⋅ {N}_{preamble}^{total} / N$, that is, preamble indexes corresponding to the SSB whose index is n are $n ⋅ {N}_{preamble}^{total} / N$ to $n ⋅ {N}_{preamble}^{total} / N + R - 1$, where 0 ≤ n ≤ *N* - 1.

For example, FIG. 2 is a diagram of an example of the mapping relationship between an SSB and a preamble when two SSBs correspond to one RO (one RO has two SSBs). The two SSBs are an SSB 0 and an SSB 1. An index (index) of the SSB 0 is 0, and an index (index) of the SSB 1 is 1. Preamble indexes corresponding to the SSB 0 are $0 ⋅ {N}_{preamble}^{total} / 2 = 0$ to R-1 (corresponding to n=0). Preamble indexes corresponding to the SSB 1 are $1 ⋅ {N}_{preamble}^{total} / 2 = {N}_{preamble}^{total} / 2 to {N}_{preamble}^{total} / 2 + R - 1$ (corresponding to n=1). ${N}_{preamble}^{total}$ is a total quantity of preambles. The quantity R configured by a base station is definitely a multiple of N. If ${N}_{preamble}^{total} = 64$, in the RO, the SSB 1 corresponds to n=0, and the SSB 2 corresponds to n=1.

### Fifth: PRACH resource configuration information and SSB-RO mapping relationship

An RO resource configuration and an SSB-RO mapping relationship for a non-coverage-enhanced PRACH are first described. For example, a network device may send PRACH resource configuration information to a terminal device using a "RACH-ConfigGeneric" information element (signaling). The PRACH resource configuration information is used to configure a PRACH resource (that is, an RO resource). In other words, the PRACH resource configuration information is used to configure a time domain resource and a frequency domain resource of an RO. The terminal device sends a preamble on the RO. The PRACH resource may include a plurality of ROs, or in other words, the RO is a granularity or a unit of the PRACH resource. Each terminal device may perform random access using a PRACH resource in a UL slot.

For example, FIG. 3 is a diagram of an example of the PRACH resource. As shown in FIG. 3, a horizontal direction (an x-axis) represents time domain, a vertical direction (a y-axis) represents frequency domain, a downlink (downlink, DL) slot is on a left side, and a UL slot is on a right side. The UL slot includes a PRACH resource specified by the "RACH-ConfigGeneric" information element. For example, the terminal device may look up in Tables 6.3.3.2-2 to 6.3.3.2-4 based on a parameter "prach-ConfigurationIndex" in the higher layer information element "RACH-ConfigGeneric", to obtain time domain position information of the PRACH resource, such as a time domain distribution cycle, a frame number, a subframe number, a slot number, and a quantity of ROs in a slot.

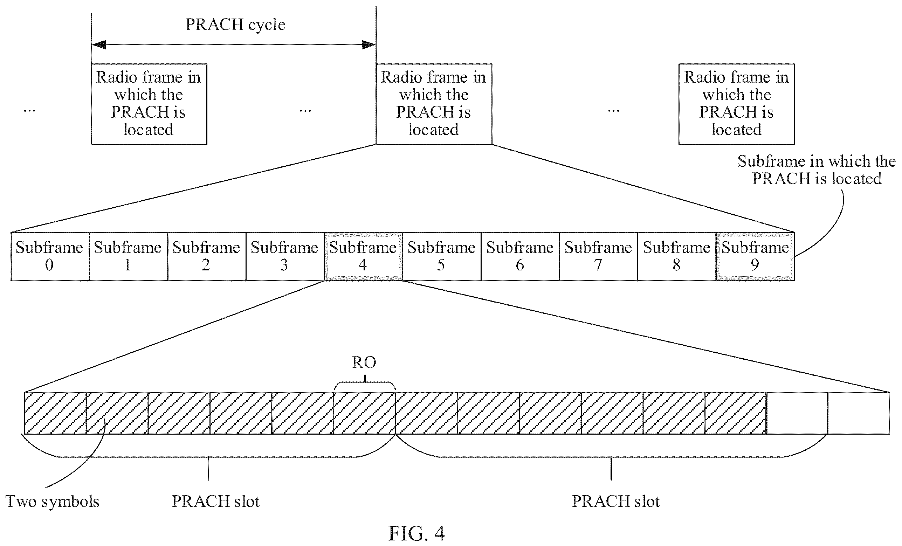

For example, FIG. 4 is a diagram of an example of the PRACH resource in time domain. As shown in FIG. 4, three blocks at an uppermost layer in the figure represent radio frames in which the PRACH resource is located. A time domain distance between two adjacent blocks is a cycle of the PRACH resource. A middle layer represents a subframe composition structure of the radio frame in which the PRACH resource is located. Two blocks represented by shadows are subframes (a subframe 4 and a subframe 9) in which the PRACH resource is located. A lowermost layer represents a slot structure of the subframe in which the PRACH resource is located. As shown in FIG. 4, the subframe includes a slot in which the PRACH resource is located, which is referred to as a PRACH slot. As shown in FIG. 4, the subframe includes two PRACH slots. Each PRACH slot includes six small blocks, and each small block is one RO (one RO includes two OFDM symbols, one slot includes 14 OFDM symbols, and remaining symbols are not shown in FIG. 4). In other words, one PRACH slot includes six ROs.

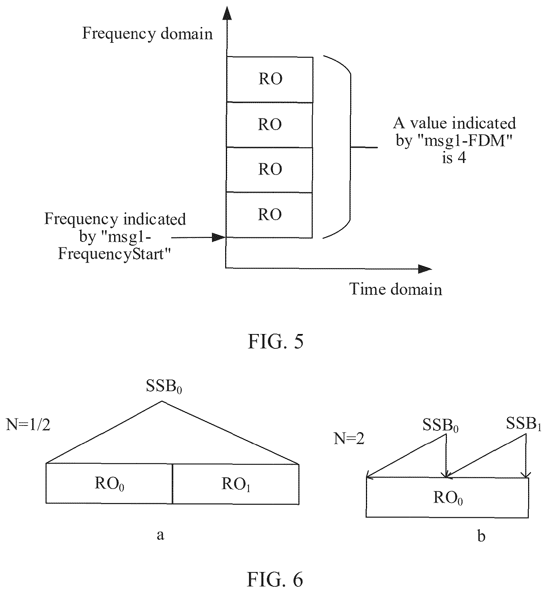

A frequency domain start position of the PRACH resource and a quantity of frequency division multiplexing times can be obtained based on parameters "msg1-FrequencyStart" and "msg1-FDM" in the higher layer information element "RACH-ConfigGeneric". This also determines a frequency domain position of the PRACH resource. For example, FIG. 5 is a diagram of an example of the PRACH resource in frequency domain. The frequency domain start position of the PRACH resource may be determined based on the parameter "msg1-FrequencyStart". It is assumed that a value indicated by "msg1-FDM" is 4, that is, there are four frequency domain RACH occasions on one time domain RACH occasion. In the example shown in FIG. 5, each block represents one RO, and four ROs are arranged starting from a frequency domain position specified by "msg1-FrequencyStart".

As described above, in a process of transmitting an Msg1, the terminal device selects one RO based on an SSB index, to transmit a preamble sequence. Therefore, in an NR standard, in addition to a PRACH resource location, an RO-SSB association relationship (for example, one SSB index may be associated with (correspond to) a plurality of ROs, or a plurality of SSB indexes are associated with (correspond to) one RO), that is, an association relationship between an SSB and an RO, needs to be further specified.

Specifically, the network device may configure an association relationship between N SSBs and one RO using a higher layer parameter "ssb-perRACH-OccasionAndCB-preamblesPerSSB". When N is less than 1, one SSB is associated with 1/N ROs. When N is greater than or equal to 1, N SSBs are associated with one RO (or in other words, one SSB is associated with 1/N ROs).

For example, FIG. 6 is a diagram of an example of the association relationship between the SSB and the RO. In an example shown in FIG. a in FIG. 6, N=1/2, and one SSB (an SSB₀) is associated with two ROs (an RO₀ and an RO₁). In an example shown in FIG. b in FIG. 6, when N=2, one RO (anRO₀) is associated with two SSBs (an SSB₀ and an SSB₁).

When one SSB index is associated with a plurality of ROs, the terminal device selects one of the plurality of ROs, and selects a preamble sequence transmitted on the RO. After the association relationship between the RO and the SSB is determined, RO-SSB mapping (that is, a mapping sequence between the SSB and the RO) may be started according to the following step sequence:
first, preamble indexes in one RACH occasion (that is, one RO) are in ascending order;
second, frequency resource indexes of frequency multiplexed RACH occasions (the RACH occasions may also be referred to as ROs) are in ascending order, that is, mapping is performed in ascending order in frequency domain;
third, time domain resource indexes of time domain multiplexed PRACH occasions in one PRACH slot is in ascending order, that is, mapping is performed in chronological order in one PRACH slot; and
fourth, PRACH slot indexes are in ascending order, that is, mapping is performed in ascending order of the PRACH slot indexes, that is, in chronological order.

In conclusion, RO-to-SSB (RO-SSB) mapping may be performed according to the following rules: first mapping in an RO in ascending order of preamble indexes; then, mapping first in frequency domain and then in time domain; and then, mapping in a same slot, then in a same frame, and finally across different frames.

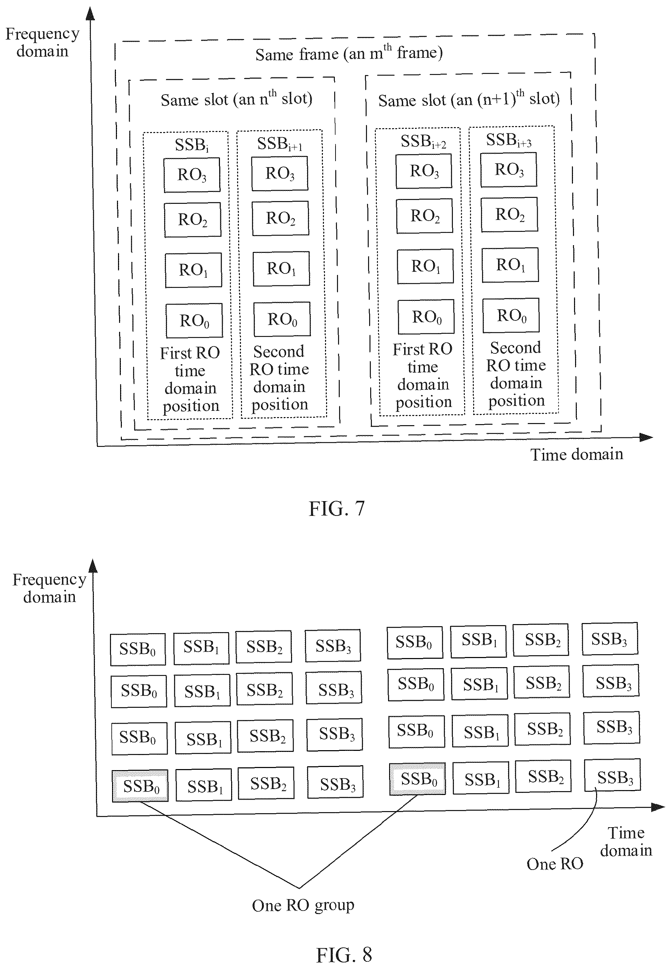

For example, FIG. 7 is a diagram of an example of an RO-to-SSB mapping process (mapping sequence). In the example shown in FIG. 7, it is assumed that an SSB set used by the network device is {SSBi, SSBᵢ₊₁, SSBᵢ₊₂, SSBᵢ₊₃}, msg1-FDM=4, and N=1/4. One SSB is associated with four ROs. An RO set is denoted as {RO₀, RO₁, RO₂, RO₃}. The 16 ROs complete a complete RO-SSB mapping cycle.

In the example shown in FIG. 7, the RO-SSB mapping sequence is arranged starting from frequency domain corresponding to an RO time domain position. In other words, the RO₀ to the RO₃ corresponding to the SSBᵢ occupy four RO positions in frequency domain corresponding to a first RO time domain position in a start PRACH slot (for example, an n^{th} slot) of a same frame (for example, an m^{th} frame), the RO₀ to the RO₃ corresponding to the SSBᵢ₊₁ occupy four RO positions in frequency domain corresponding to a second RO time domain position in the start PRACH slot (the n^{th} slot), the RO₀ to RO₃ corresponding to the SSBᵢ₊₂ occupy four RO positions in frequency domain corresponding to a first RO time domain position in a second PRACH slot (an (n+1)^{th} slot) of the same frame (the m^{th} frame), and the RO₀ to the RO₃ corresponding to the SSBᵢ₊₃ occupy four RO positions in frequency domain corresponding to a second RO time domain position of the second PRACH slot (the (n+1)^{th} slot) of the same frame (the m^{th} frame).

### Sixth: SSB-RO group (group) mapping relationship for a coverage enhanced PRACH

To improve uplink coverage of a PRACH, PRACH repetition is now being discussed, and a quantity of repetitions (which may also be referred to as a repetition level) may be 2, 4, or 8. For example, if the quantity of repetitions is 2, two ROs are required. Two ROs corresponding to a same SSB index form a group, which is referred to as an RO group. In addition, different ROs in one RO group correspond to different time domain positions. For example, an RO_{A} and an RO_{B} form a group, the RO_{A} and the RO_{B} are associated with a same SSB index, and the RO_{A} and the RO_{B} correspond to different time domain positions. In a random access procedure, a terminal device sends a preamble separately on the RO_{A} and the RO_{B}, and then receives an Msg2 sent by a network device. If the Msg2 sent by the network device is not received, it is referred to as a RACH attempt (RACH attempt) failure, and a RACH attempt continues to be performed subsequently.

A specific method for determining an RO group is that ROs corresponding to a same SSB index may form an RO group, and generally, ROs that are closest in time domain are found. For example, as shown in FIG. 8, each block represents an RO, and an identifier on the block represents an SSB index corresponding to the RO. For example, in FIG. 8, if the quantity of repetitions is 2, two ROs identified by the shadow parts form an RO group, and the two ROs correspond to an SSB₀. In addition, the two ROs are inconsecutive in time domain, and have a time interval.

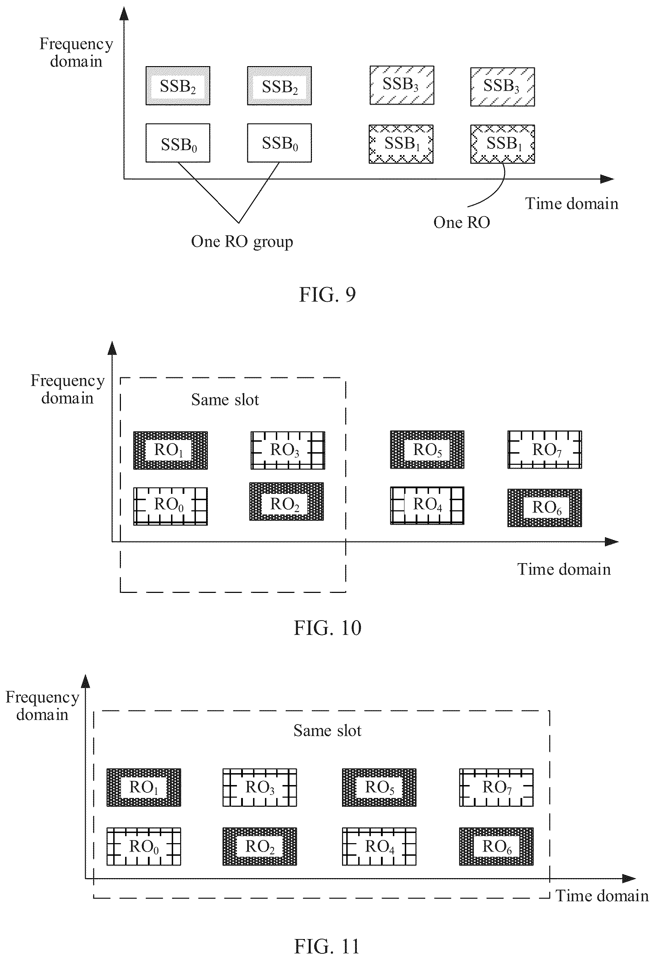

For another example, as shown in FIG. 9, each block represents an RO, and an identifier on the block represents an SSB index corresponding to the RO. For example, in FIG. 9, if the quantity of repetitions is 2, two ROs identified by a same shadow part form an RO group. The two ROs are consecutive in time domain, and do not have a time interval. For example, two ROs corresponding to an SSB₀ form an RO group, two ROs corresponding to an SSB₁ form an RO group, two ROs corresponding to an SSB₂ form an RO group, and two ROs corresponding to an SSB₃ form an RO group. The two ROs in each RO group are inconsecutive in time domain, and have a time interval. This can reduce a delay.

It should be understood that one RO group corresponds to one SSB. However, a same RO may belong to different RO groups. An index (index) of each RO group is unique. An index of an RO group is determined by an SSB index and a repetition level.

The following uses examples to describe an RO frequency hopping manner in an RO group.

FIG. 10 is a diagram of an example of the RO frequency hopping manner in the RO group. In the example shown in FIG. 10, a value indicated by "msg1-FDM" is 2, the RO group may include two or four ROs, and different ROs in the RO group are located at different time domain positions. Each block represents an RO, and ROs with a same shadow shape may represent that the ROs belong to a same RO group.

A PRACH is sent repeatedly on N ROs in the RO group in a frequency hopping manner. For example, when N=2, an RO₀ and an RO₃ form a group, and the terminal device sends the preamble separately on the RO₀ and the RO₃, where the RO₀ and the RO₃ correspond to different frequency domain positions; or an RO₁ and an RO₂ form a group, and the terminal device sends the preamble separately on the RO₁ and the RO₂, where the RO₁ and the RO₂ correspond to different frequency domain positions. When N=4, an RO₀, an RO₃, an RO₄, and an RO₇ form a group, and the terminal device sends the preamble separately on the RO₀, the RO₃, the RO₄, and the RO₇, where the RO₀ and the RO₄ correspond to a same frequency domain position, and the RO₅ and the RO₆ correspond to a same frequency domain position, but the RO₀ and the RO₃ correspond to different frequency domain positions; and an RO₁, an RO₂, an RO₅, and an RO₆ form a group, and the terminal device sends the preamble separately on the RO₁, the RO₂, the ROs, and the RO₆.

In the example shown in FIG. 10, if N=2, the RO₀ and the RO₃ may belong to a same slot (slot), and the RO₁ and the RO₂ belong to a same slot. If N=4, as shown in FIG. 11, FIG. 11 is a diagram of slots corresponding to different ROs in the scenario shown in FIG. 10. In the example shown in FIG. 11, the RO₀, the RO₃, the RO₄, and the RO₇ belong to a same slot, and the RO₁, the RO₂, the ROs, and the RO₆ belong to a same slot.

It can be learned from FIG. 10 and FIG. 11 that for a plurality of ROs in an RO group, when the preamble is sent on the plurality of ROs in the frequency hopping manner, a plurality of ROs located in a same slot correspond to different frequencies, for example, the RO₁ and the RO₂ or the RO₀ and the RO₃ in FIG. 10, for another example, the RO₀, the RO₃, the RO₄, and the RO₇, or the RO₁, the RO₂, the ROs, and the RO₆ in FIG. 11.

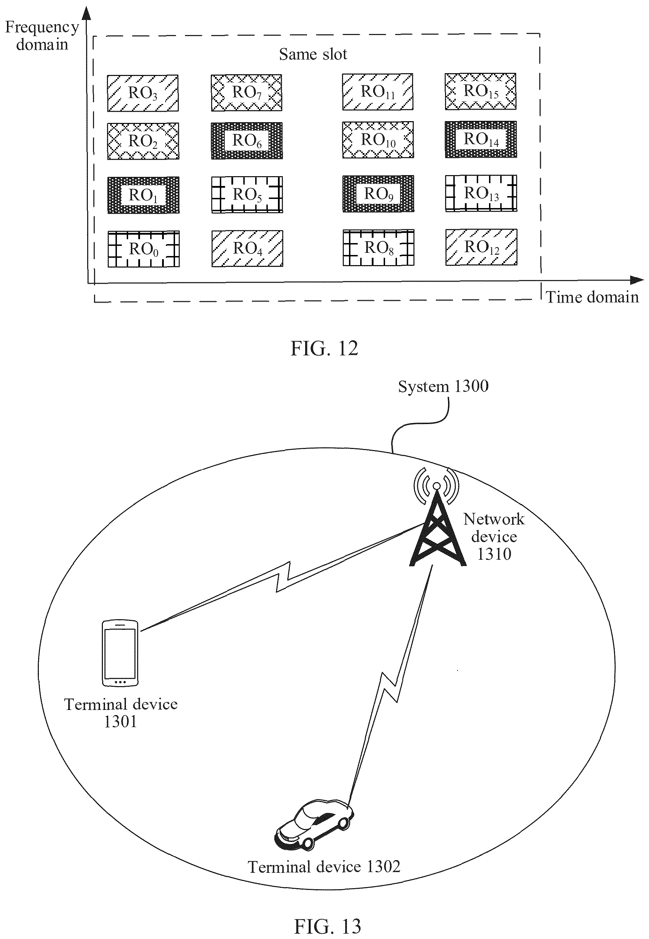

FIG. 12 is a diagram of another example of the RO frequency hopping manner in the RO group. In the example shown in FIG. 12, a value indicated by "msg1-FDM" is 4, the RO group may include two or four ROs, and each RO is located at a different time domain position. Each block represents an RO, and ROs with a same shadow shape may represent that the ROs belong to a same RO group.

The preamble is sent repeatedly on N ROs in the RO group in a frequency hopping manner. For example, when N=4, an RO₀, an ROs, an ROs, and an RO₁₃ form a group, and the terminal device sends the preamble separately on the RO₀, the ROs, the ROs, and the RO₁₃, where the RO₀ and the RO₈ correspond to a same frequency domain position, and the RO₅ and the RO₁₃ correspond to a same frequency domain position, but the RO₀ and the RO₅ correspond to different frequency domain positions. In the example shown in FIG. 12, the RO₀, the RO₅, the RO₈, and the RO₁₃ may belong to a same slot.

In the examples shown in FIG. 10 to FIG. 12, although a frequency diversity gain can be obtained by sending the preamble in the RO group in the RO frequency hopping manner, for a plurality of ROs in a same RO group, a plurality of ROs belonging to a same slot may be located at different frequency positions. Consequently, when the terminal device sends the preamble repeatedly (that is, sends the preamble repeatedly) using the RO group, preambles received by the network device on different ROs experience different channels and phase jumps. As a result, coherent combination effects of received preamble sequences on a plurality of ROs in a same slot are poor, and coherent detection performance deteriorates.

In view of this, this application provides a transmission method. For a plurality of ROs in a same RO group, a frequency hopping manner in which an RO bundle (bundle) is used as a granularity, or a frequency hopping manner in which one slot or a plurality of adjacent slots are used as a granularity is used. One RO bundle may include a plurality of ROs in time domain, and the plurality of ROs in the RO bundle correspond to a same frequency domain location (that is, no frequency hopping is performed). No frequency hopping is performed on ROs belonging to a same slot in the RO group, or frequency hopping is performed on ROs not belonging to a same slot using a frequency hopping step. Alternatively, no frequency hopping is performed on ROs belonging to a plurality of adjacent slots in the RO group, or frequency hopping is performed on ROs not belonging to a plurality of adjacent slots using a frequency hopping step. Preambles in one RO bundle experience a same (close) channel and phase jump, or preambles in a same slot or adjacent slots experience a same (close) channel and phase jump. When frequency hopping is performed in the frequency hopping manner in which the RO bundle is used as the granularity, coherent combination may be first performed on preamble sequences transmitted separately on ROs in one RO bundle, where coherent combination can improve average power of a to-be-detected sequence; and then a combined sequence is used for detection, to improve a preamble detection success probability. Frequency hopping may be performed on preamble sequences transmitted on different RO bundles. Frequency hopping can reduce a probability that all channels for repeated preamble transmission are in deep fading (that is, not in deep fading). Therefore, a frequency diversity

(diversity) gain can be improved. When frequency hopping is performed in the frequency hopping manner in which the slot is used as the granularity, coherent combination may be first performed on preamble sequences in a same slot or adjacent slots (the adjacent slots correspond to close channels), and then a combined sequence is used for detection, to improve a preamble detection success probability. Frequency hopping may be performed on preamble sequences in different slots or non-adjacent slots, to improve a frequency diversity (diversity) gain. In other words, a frequency hopping gain and a coherent detection gain are combined.

It should be understood that in embodiments of this application, the same slot or the plurality of adjacent slots may be understood as a same PRACH slot (slot) or a plurality of adjacent PRACH slots (slot). The plurality of adjacent slots may be understood as that sequence numbers of the plurality of slots are adjacent or consecutive.

For ease of understanding embodiments of this application, a communication system applicable to embodiments of this application is first briefly described with reference to FIG. 13. FIG. 13 is a diagram of a communication system 1300 applicable to embodiments of this application. As shown in FIG. 13, the communication system 1300 includes three communication devices, for example, a network device 1310, a terminal device 1301, and a terminal device 1302. Signals and data may be transmitted between the network device 1310 and the terminal device 1301 and between the network device 1310 and the terminal device 1302 through an uplink or a downlink, for example, uplink or downlink control information and data are transmitted through a Uu interface. For example, transmitted signaling or data may include a preamble, a reference signal, physical layer control information such as downlink control information (downlink control information, DCI) and uplink control information (uplink control information, UCI), control plane (control plane, CP) data such as a radio resource control (radio resource control, RRC) message, and user plane (user plane, UP) data.

In the example shown in FIG. 13, a transmission method provided in this application may be used in a process of performing random access between different terminal devices and the network device, for example, in a process in which the terminal device 1301 and/or the terminal device 1302 send/sends preambles to the network device.

For example, the communication system shown in FIG. 13 may be a cellular system related to the 3rd generation partnership project (3rd generation partnership project, 3GPP), for example, a global system of mobile communication (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, LTE time division duplex (Time Division Duplex, TDD), a universal mobile telecommunications system (Universal Mobile Telecommunications System, UMTS), a worldwide interoperability for microwave access (Worldwide Interoperability for Microwave Access, WiMAX) communication system, 4G and 5G mobile communication systems (including standalone networking and non-standalone networking), new radio (New Radio, NR), or a future-oriented evolved system (for example, a 6G mobile communication system); may be an open access network (open RAN, O-RAN or ORAN), a cloud radio access network (cloud radio access network, CRAN), or a wireless fidelity (wireless fidelity, Wi-Fi) system; or may be a communication system integrating two or more of the foregoing systems. This is not limited herein in embodiments of this application.

For example, in the communication system shown in FIG. 13, different devices may be in a high-frequency transmission scenario, for example, transmission with a millimeter wave or a terahertz (THz) wave. Certainly, different devices may be in a low-frequency transmission scenario, for example, signaling or data transmission with a wave in a frequency band, for example, 700 MHz, 900 MHz, 2.1 GHz, 2.6 GHz, or 3.5 GHz.

For example, the method provided in embodiments of this application may also be applied to a non-terrestrial network (Non-Terrestrial Network, NTN) communication link, for example, a satellite communication link. This is not limited in embodiments of this application.

In embodiments of this application, the network device may also be sometimes referred to as a radio access network (radio access network, RAN) device, an access network device, a RAN node, a RAN entity, an access node, or the like, and constitutes a part of the communication system, to help a terminal implement radio access.

In a possible scenario, the radio access network device may be a base station (base station), an evolved base station (evolved NodeB, eNodeB), an access point (access point, AP), a transmission reception point (transmission reception point, TRP), a next generation base station (next generation NodeB, gNB), a next generation base station in a 6th generation (6th generation, 6G) mobile communication system, a base station in a future mobile communication system, an access node in the Wi-Fi system, or the like. The RAN node may be a macro base station, a micro base station or an indoor base station, a relay node or a donor node, or a radio controller in a CRAN scenario. Optionally, the RAN node may alternatively be a server, a wearable device, a vehicle, an in-vehicle device, or the like. For example, an access network device in a vehicle-to-everything (vehicle-to-everything, V2X) technology may be a roadside unit (roadside unit, RSU). All or a part of functions of the radio access network device in this application may alternatively be implemented using a software function running on hardware, or may be implemented using a virtualization function instantiated on a platform (for example, a cloud platform). Alternatively, the radio access network device in this application may be a logical node, a logical module, or software that can implement all or a part of functions of the radio access network device.

In an NR technology, the radio access network device (for example, the gNB) may include one gNB central unit (Central Unit, CU) and one or more gNB distributed units (Distributed Unit, DU). The gNB-CU and the gNB-DU are different logical nodes, and may be deployed on different physical devices or deployed on a same physical device.

If an architecture in which a control plane and a user plane are split is considered, the gNB-CU may be further divided into a central unit-control plane (Central Unit-Control Plane, CU-CP) entity (or referred to as a CU-CP node) and a central unit-user plane (Central Unit-User Plane, CU-UP) entity (or referred to as a CU-UP node). The gNB-CU-CP is a control plane entity, and is configured to provide signaling control. The gNB-CU-UP is a user plane entity, and is configured to provide transmission of data of the terminal device.

In embodiments of this application, the terminal device may also be referred to as a terminal, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

It should be understood that in embodiments of this application, the "radio access network device" may be described differently. For example, the "radio access network device" may also be referred to as a network device, a RAN node, or an access network device. Unless otherwise specified, the "network device" is used for expression in this application. The network device is an original expression of an access network device (for example, a base station).

It should be understood that the communication system shown in FIG. 13 is merely an example, and should not constitute any limitation on the communication system applicable to embodiments of this application. For example, the communication system shown in FIG. 13 may further include more or fewer network nodes, for example, terminal devices or radio access network devices. The radio access network device or the terminal device included in the communication system shown in FIG. 13 may be the radio access network device or the terminal device in the foregoing forms. A relay device included in the communication system shown in FIG. 13 may be the radio access network device or the terminal device in the foregoing forms. Details are not shown one by one in the figure in this embodiment of this application.

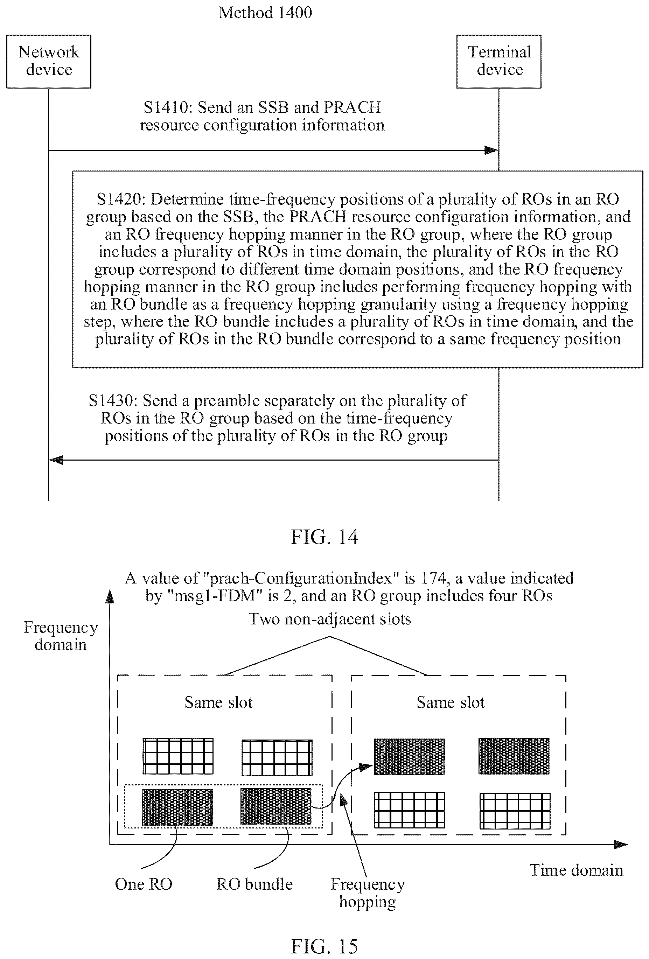

The following describes in detail the method provided in this application with reference to FIG. 14. FIG. 14 is a diagram of interaction in a transmission method according to an embodiment of this application. The method 1400 may be applied to the scenario shown in FIG. 13, and certainly may also be applied to another communication scenario. This is not limited herein in this embodiment of this application.

It should be understood that in this embodiment of this application, the method is described by using an example in which the method is performed by a terminal device and a network device. By way of example and not limitation, the terminal device in this application may alternatively be a chip, a chip system, or a processor that supports the terminal device in implementing the method; and the network device in this application may alternatively be a chip, a chip system, or a processor that supports the network device in implementing the method, or may be a logical node, a logical module, or software that can implement all or a part of functions of the network device.

It should be further understood that in this application, "sending information to ... (the terminal device)" may be understood as that a destination end of the information is the terminal, and may include directly or indirectly sending information to the terminal device. "Receiving information from ... (the terminal device)" may be understood as that a source end of the information is the terminal device, and may include directly or indirectly receiving the information from the terminal device. Information may undergo necessary processing, for example, a format change, between a source end a destination end for sending of the information. However, the destination end may understand valid information from the source end. A similar expression in this application may be understood similarly, and details are not described herein again.

As shown in FIG. 14, the method 1400 shown in FIG. 14 may include S1410 to S1430. The following describes the steps in the method 1400 in detail with reference to FIG. 14.

S1410: The network device sends an SSB and PRACH resource configuration information to the terminal device.

Correspondingly, the terminal device receives the SSB and the PRACH resource configuration information. Optionally, the PRACH resource configuration information may also be referred to as PRACH resource indication information. The PRACH resource configuration information is used to configure a time domain resource and a frequency domain resource of an RO.

For example, the SSB includes a primary synchronization signal PSS, an SSS, and a PBCH. The PSS and the SSS are mainly used to help the terminal device identify a cell and perform synchronization with the cell. The PBCH includes most basic system information such as a system frame number and intra-frame timing information. The PBCH may include a MIB, and the MIB includes configuration information required for interpreting a SIB1 message. The SIB 1 message may include information such as an uplink slot and a downlink slot.

For example, the PRACH resource configuration information may include RO group information, for example, include information such as a quantity of ROs included in an RO group and a time-frequency position of a first RO in the RO group.

For example, the network device may send the PRACH resource configuration information to the terminal device using a "RACH-ConfigGeneric" information element.

S1420: The terminal device determines time-frequency positions of a plurality of ROs in the RO group based on the SSB, the PRACH resource configuration information, and an RO frequency hopping manner (the frequency hopping manner may also be referred to as a frequency hopping pattern) in the RO group, where the RO group includes a plurality of ROs in time domain, the plurality of ROs in the RO group correspond to different time domain positions, and the RO frequency hopping manner in the RO group includes performing frequency hopping with an RO bundle as a frequency hopping granularity using a frequency hopping step, where the RO bundle includes a plurality of ROs in time domain, and the plurality of ROs in the RO bundle correspond to a same frequency position.

For example, in S1420, the terminal device may determine the time-frequency positions of the ROs in the RO group based on an association relationship between the received SSB and the RO, a mapping relationship between the SSB and the RO, the PRACH resource configuration information (for example, including the quantity of ROs included in the RO group and the time-frequency position of the first RO in the RO group), the frequency hopping manner, and the like.

For example, the terminal device may receive a plurality of SSBs sent by the network device, receive a SIB1 based on information in each SSB, and obtain signal strength of each SSB (or each beam) based on the SSB and SIB1 signaling. For example, the signal strength may be reference signal received power (reference signal received power, RSRP) corresponding to each SSB. Optionally, the network device may further configure or indicate an RSRP threshold to the terminal device, and the terminal device compares the RSRP corresponding to each SSB with the RSRP threshold, to determine one or more SSBs whose RSRP is greater than the RSRP threshold. If there are a plurality of SSBs whose RSRP is greater than the RSRP threshold, the terminal device may determine (for example, randomly select) one SSB (referred to as a target SSB for differentiation) from the plurality of SSBs, and then compare the determined RSRP corresponding to the target SSB with a plurality of RSRP thresholds used to determine a quantity of repetitions, to determine a quantity of repetitions corresponding to the target SSB. For example, the plurality of RSRP thresholds used to determine the quantity of repetitions may be configured by the network device or predefined. The quantity of repetitions corresponding to the target SSB may be understood as a quantity of ROs included in an RO group corresponding to the target SSB. Then, a time-frequency position of a first RO in the target RO group corresponding to the target SSB may be determined based on an association relationship between the target SSB and the RO (the association relationship between the target SSB and the RO is predefined in a protocol), a mapping sequence between the target SSB and the RO (the mapping sequence between the target SSB and the RO is predefined in the protocol), the quantity of repetitions corresponding to the target SSB, and the PRACH resource configuration information (for example, including the time-frequency position of the first RO in the RO group). Then, a time-frequency position of another RO included in the target RO group may be determined based on an RO frequency hopping manner in the RO group, that is, time-frequency positions of a plurality of ROs in the target RO group are determined.

It may be understood that after determining the time-frequency positions of the plurality of ROs in the RO group, the terminal device may determine the RO group.

In some implementations, a quantity of ROs included in the RO bundle needs to be less than or equal to the quantity of ROs in the RO group.

Optionally, in this embodiment of this application, the RO frequency hopping manner in the RO group may also be referred to as the RO frequency hopping pattern (pattern) in the RO group, or another name. The RO frequency hopping manner in the RO group may be used to determine frequency domain positions of the plurality of ROs included in the RO group.

It should be understood that in this embodiment of this application, the ROs in the RO group correspond to one SSB, or correspond to a plurality of SSBs that are the same. SSBs corresponding to the ROs in the RO group include at least one SSB in common. For example, each RO in the RO group corresponds to one SSB, and different ROs correspond to the same SSB. Alternatively, each RO in the RO group corresponds to a plurality of SSBs, and the SSBs corresponding to different ROs include at least one SSB in common. A same RO may belong to different RO groups. An index (index) of each RO group is unique. An index of an RO group is determined by an SSB index and a repetition level.

It should be understood that in this embodiment of this application, an RO group may include a plurality of ROs in time domain, and time domain positions (or time positions) corresponding to the plurality of ROs in the RO group are different.

For example, the RO group includes four ROs (that is, a four-RO group). Each of the four ROs in the four ROs corresponds to one time domain position, and the time domain positions corresponding to the four ROs are different. In other words, that the time domain positions (or the time positions) corresponding to the plurality of ROs in the RO group are different may be understood as follows: The plurality of ROs in the RO group correspond to different time domain positions (or time positions).

In this embodiment of this application, in a possible implementation, the RO frequency hopping manner in the RO group is frequency hopping with the RO bundle (RO bundle) as the frequency hopping granularity (or a frequency hopping unit) using the frequency hopping step. The RO bundle may include a plurality of ROs in time domain, and the plurality of ROs in the RO bundle correspond to a same frequency position. In other words, for the plurality of ROs in the RO bundle, no frequency hopping is performed on the ROs.

In this embodiment of this application, using the RO bundle (RO bundle) as the frequency hopping granularity may be understood as, in a single frequency hopping process, performing frequency hopping on a plurality of ROs as a whole in time domain, or how large a resource block on which frequency hopping is performed as a whole is. The RO bundle may be understood as the resource block. For example, a size of the resource block in time domain may be represented by a quantity of ROs in time domain or a size of a time domain resource occupied in time domain, and a size of the resource block in frequency domain may be represented by a quantity of ROs in frequency domain or a size of a frequency domain resource occupied in frequency domain.

For example, the frequency hopping step (step) may be understood as a frequency domain resource size or a frequency domain resource length jumped over in a single frequency hopping process, that is, a frequency domain resource size jumped over at one time. For example, the frequency hopping step (step) may be determined based on a difference or a gap (gap) between a frequency domain position of an RO bundle after frequency hopping and a frequency domain position of the RO bundle before frequency hopping after frequency hopping ends. For example, the frequency hopping step (step) may be the gap (gap).

S1430: The terminal device sends a preamble separately on the plurality of ROs in the RO group based on the time-frequency positions of the plurality of ROs in the RO group.

For example, when the terminal device sends the preamble separately (or sends the preamble repeatedly) on the plurality of ROs in the RO group, frequency hopping is performed in the RO group with the RO bundle as the frequency hopping granularity (or the frequency hopping unit) using the frequency hopping step. The RO bundle may include a plurality of ROs in time domain, and the plurality of ROs in the RO bundle correspond to a same frequency position. After the network device receives the preamble separately at the time-frequency positions of the plurality of ROs in the RO group, because preambles in one RO bundle experience a same (close) channel and phase jump, coherent combination may be first performed on preamble sequences transmitted on ROs in one RO bundle, where coherent combination can improve average power of a to-be-detected sequence; and then a combined sequence is used for detection, to improve a preamble detection success probability. Frequency hopping may be performed on preamble sequences transmitted on different RO bundles. Frequency hopping can reduce a probability that all channels for repeated preamble transmission are in deep fading (that is, not in deep fading). Therefore, a frequency diversity (diversity) gain can be improved. In other words, a frequency hopping gain and a coherent detection gain are combined.

It should be understood that in this embodiment of this application, the RO frequency hopping manner (frequency hopping pattern) in the RO group may be predefined in the protocol, or may be indicated by the network device to the terminal device using signaling or information.

Optionally, in a possible implementation, in this embodiment of this application, the RO bundle may correspond to (belong to) a same slot or a plurality of adjacent slots in terms of time (or in time domain). For example, the plurality of ROs included in the RO bundle may belong to (correspond to) a same slot, or may belong to (correspond to) a plurality of adjacent slots, for example, two adjacent slots.

It should be understood that in this embodiment of this application, the same slot or the plurality of adjacent slots may be understood as a same PRACH slot (slot) or a plurality of adjacent PRACH slots (slot).

It should be understood that in this embodiment of this application, the plurality of adjacent slots may be understood as that sequence numbers of the plurality of slots are adjacent or consecutive. For example, a slot 2 and a slot 3 are two adjacent or consecutive slots.

In other words, in this embodiment of this application, a plurality of ROs in a same slot correspond to a same frequency domain position (that is, no frequency hopping is performed), or ROs in a plurality of adjacent slots correspond to a same frequency domain position (that is, no frequency hopping is performed).

Because the RO bundle corresponds to (belongs to) the same slot or the plurality of adjacent slots in terms of time (or in time domain), that is, no frequency hopping is performed on ROs in a same slot or a plurality of adjacent slots, after the terminal device sends the preamble on each RO in this manner, and the network device receives the preamble, preambles in a same slot or adjacent slots experience a same (close) channel and phase jump. Therefore, coherent combination may be performed on preamble sequences in a same slot or adjacent slots (the adjacent slots correspond to close channels), to improve preamble detection power. Frequency hopping may be performed on preamble sequences in different slots or non-adjacent slots, to improve the frequency diversity (diversity) gain and avoid deep fading.

In a possible implementation, in this embodiment of this application, the RO bundle may correspond to (belong to) a same slot or a plurality of adjacent slots in time domain. In other words, for a size of the RO bundle in time domain, in a possible implementation, the size may be represented by a quantity of slots corresponding to the RO bundle in time domain. In other words, during frequency hopping, a frequency hopping granularity in time domain may be one slot or a plurality of adjacent slots.

In another possible implementation, in this embodiment of this application, a quantity of ROs included in the RO bundle in time domain includes any one of 2, 3, 4, 5, 6, or 7. In other words, for a size of the RO bundle in time domain, in a possible implementation, the size may be represented by the quantity of ROs included the RO bundle in time domain.

For example, the RO bundle (that is, a frequency hopping granularity in time domain) may include two ROs in time domain. In other words, the RO bundle (that is, the frequency hopping granularity in time domain) may include two ROs in time domain. For example, for a preamble in a C2 format, one slot may include one RO or two ROs, and two slots may include two ROs or four ROs.

For example, the RO bundle may include three ROs in time domain. In other words, the RO bundle (that is, a frequency hopping granularity in time domain) may include three ROs in time domain. For example, for a preamble in a C0 format, one slot may include three ROs.

For example, the RO bundle may include four ROs in time domain. In other words, the RO bundle (that is, a frequency hopping granularity in time domain) may include four ROs in time domain. For example, for a preamble in a C2 format, two slots may include two ROs or four ROs.

For example, the RO bundle may include five ROs in time domain. In other words, the RO bundle (that is, a frequency hopping granularity in time domain) may include five ROs in time domain. For example, one slot may include three ROs or six ROs, where one RO is occupied by another SSB, and the remaining five ROs are occupied by a same SSB (the remaining five ROs belong to a same RO group).

For example, the RO bundle may include six ROs in time domain. In other words, the RO bundle (that is, a frequency hopping granularity in time domain) may include six ROs in time domain. For example, for a preamble in an A1-B1 format (mixed format), one slot includes three ROs or six ROs.

For example, the RO bundle may include seven ROs in time domain. In other words, the RO bundle (that is, a frequency hopping granularity in time domain) may include seven ROs in time domain. For example, for a preamble in a C0 format, one slot includes three ROs or six ROs.

For example, in this embodiment of this application, the RO bundle may include an odd quantity of ROs (for example, 3, 5, or 7) in time domain, or in other words, frequency hopping may be performed using the odd quantity of ROs as a whole. This is mainly because correspondences between ROs bound to a same SSB and slots are different. In addition, a preamble format indicates that one slot includes an odd quantity of ROs.

Optionally, in this embodiment of this application, in a possible implementation, the terminal device may determine, in the following determining manner (determining rule), whether frequency hopping needs to be performed on the RO in the RO group. In other words, the terminal device may determine, in the following determining manner (determining rule), whether frequency hopping needs to be performed on the RO in the RO group (for example, the frequency hopping granularity may be the Ro bundle or another frequency hopping granularity).

If a time domain resource occupied by an (i+1)^{th} RO in the RO group and a time domain resource occupied by an i^{th} RO in the RO group belong to a same slot or adjacent slots, the i^{th} RO and the (i+1)^{th} RO in the RO group correspond to a same frequency domain position, where a value of i is a positive integer.

If a time domain resource occupied by an (i+1)^{th} RO in the RO group and a time domain resource occupied by an i^{th} RO in the RO group do not belong to a same slot or do not belong to adjacent slots, frequency hopping is performed on the (i+1)^{th} RO in the RO group relative to the i^{th} RO based on the frequency hopping step.

It should be understood that the foregoing manner for determining whether to perform frequency hopping may be applicable when any other frequency hopping granularity is used. In other words, when it is determined, using the foregoing determining rule, that frequency hopping needs to be performed, frequency hopping may be performed using any other possible frequency hopping granularity (including but not limited to the Ro bundle).

For example, for any RO group, a first RO (optionally, i corresponding to the first RO may be 0) in the RO group is known. For a second RO in the RO group, if a time domain resource occupied by the second RO and a time domain resource occupied by the first RO belong to a same slot or adjacent slots, that is, if the second RO and the first RO belong to a same slot or adjacent slots, no frequency hopping is performed on the second RO relative to the first RO, and the second RO and the first RO correspond to a same frequency domain position. In other words, no frequency hopping is performed on ROs in a same slot or a plurality of adjacent slots.

If a time domain resource occupied by the second RO and a time domain resource occupied by the first RO do not belong to a same slot or adjacent slots, that is, if the second RO and the first RO do not belong to a same slot or adjacent slots, frequency hopping is performed on the second RO relative to the first RO using the frequency hopping step. In other words, frequency hopping needs to be performed between ROs not belonging to a same slot, or frequency hopping needs to be performed between ROs not belonging to two adjacent slots.

Whether frequency hopping needs to be performed on the RO in the RO is determined in the foregoing manner, so that it can be ensured that no frequency hopping is performed on ROs in a same slot or a plurality of adjacent slots. In addition, frequency hopping needs to be performed on ROs in different slots or non-adjacent slots. In other words, it can be ensured that preambles in a same slot or adjacent slots experience a same (close) channel and phase jump. Therefore, coherent combination may be performed on preamble sequences in a same slot or adjacent slots (the adjacent slots correspond to close channels), to improve the preamble detection power. Frequency hopping may be performed on preamble sequences in different slots or non-adjacent slots, to improve the frequency diversity (diversity) gain and avoid deep fading.

The following describes, with reference to specific examples, whether frequency hopping is performed on the ROs in the RO group with the RO bundle (RO bundle) as the frequency hopping granularity (or frequency hopping unit).

FIG. 15 is a diagram of an example of the RO frequency hopping pattern (or referred to as frequency hopping manner) in the RO group. In the example shown in FIG. 15, the RO group includes four ROs, and the RO bundle includes two ROs in time domain, or the RO bundle corresponds to (belongs to) one slot in time domain. A value indicated by "prach-ConfigurationIndex" sent by the network device is 174. A value of a parameter "msg1-FDM" is 2. In other words, there are two frequency domain ROs at a time domain position corresponding to one time domain RO. Each block represents one RO, and ROs with a same shadow shape represent ROs belonging to a same RO group. It can be learned from FIG. 15 that no frequency hopping is performed on ROs in a same slot, that is, no frequency hopping is correspondingly performed on the plurality of ROs in the RO bundle, and corresponding frequency domain positions are the same; and frequency hopping needs to be performed on ROs in two non-adjacent slots, and frequency hopping is performed as a whole with one slot (that is, the RO bundle) as a time domain granularity.

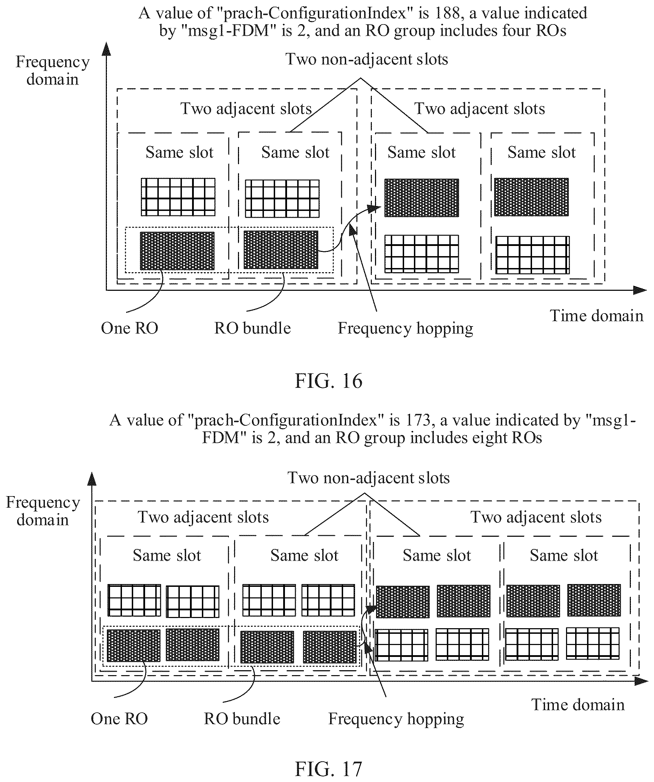

FIG. 16 is a diagram of another example of the RO frequency hopping pattern in the RO group. In the example shown in FIG. 16, the RO group includes four ROs, and the RO bundle includes two ROs in time domain, or the RO bundle corresponds to (belongs to) two adjacent slots in time domain. A value indicated by "prach-ConfigurationIndex" sent by the network device is 188. A value of a parameter "msg1-FDM" is 2. In other words, there are two frequency domain ROs at a time domain position corresponding to one time domain RO. Each block represents one RO, and ROs with a same shadow shape represent ROs belonging to a same RO group. It can be learned from FIG. 16 that no frequency hopping is performed on ROs in two adjacent slots, that is, no frequency hopping is correspondingly performed on the plurality of ROs in the RO bundle, and corresponding frequency domain positions are the same; and frequency hopping needs to be performed on ROs in non-adjacent slots, and frequency hopping is performed as a whole with two slots (that is, the RO bundle) as a time domain granularity.

FIG. 17 is a diagram of another example of the RO frequency hopping pattern in the RO group. In the example shown in FIG. 17, the RO group includes eight ROs, and the RO bundle includes four ROs in time domain, or the RO bundle corresponds to (belongs to) two adjacent slots in time domain. A value indicated by "prach-ConfigurationIndex" sent by the network device is 173. A value of a parameter "msg1-FDM" is 2. In other words, there are two frequency domain ROs at a time domain position corresponding to one time domain RO. Each block represents one RO, and ROs with a same shadow shape represent ROs belonging to a same RO group. It can be learned from FIG. 17 that no frequency hopping is performed on ROs in two adjacent slots, that is, no frequency hopping is correspondingly performed on the plurality of ROs in the RO bundle, and corresponding frequency domain positions are the same; and frequency hopping needs to be performed on ROs in non-adjacent slots, and frequency hopping is performed as a whole with two slots (that is, the RO bundle) as a time domain granularity.

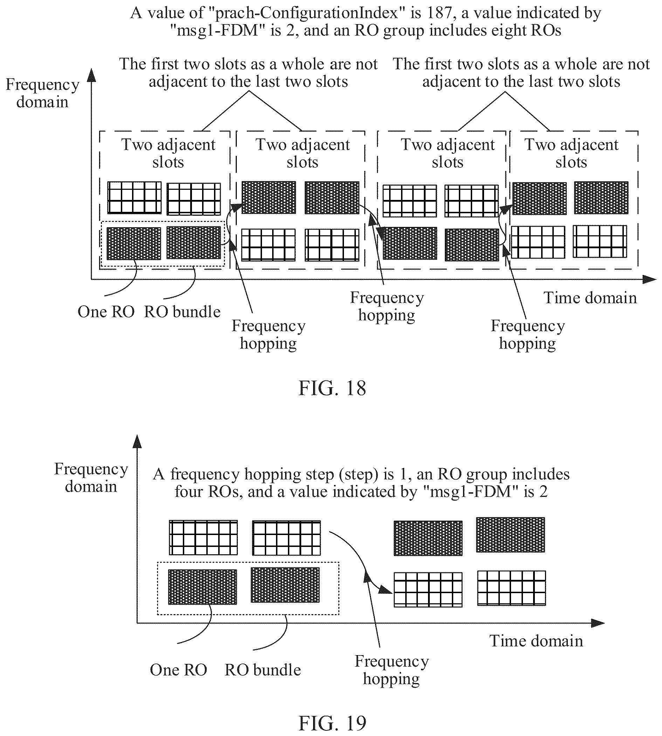

FIG. 18 is a diagram of another example of the RO frequency hopping pattern in the RO group. In the example shown in FIG. 18, the RO group includes eight ROs, and the RO bundle includes two ROs in time domain, or the RO bundle corresponds to (belongs to) two adjacent slots in time domain. A value indicated by "prach-ConfigurationIndex" sent by the network device is 187. A value of a parameter "msg1-FDM" is 2. In other words, there are two frequency domain ROs at a time domain position corresponding to one time domain RO. Each block represents one RO, and ROs with a same shadow shape represent ROs belonging to a same RO group. It can be learned from FIG. 18 that no frequency hopping is performed on ROs in two adjacent slots, that is, no frequency hopping is correspondingly performed on the plurality of ROs in the RO bundle, and corresponding frequency domain positions are the same; and frequency hopping needs to be performed on ROs in non-adjacent slots, and frequency hopping is performed as a whole with two slots (that is, the RO bundle) as a time domain granularity.

It should be understood that the foregoing several frequency hopping patterns are merely used as examples to describe whether frequency hopping is performed on the ROs in the RO group with the RO bundle (RO bundle) as the frequency hopping granularity (or frequency hopping unit) in this embodiment of this application. In another implementation of this application, the frequency hopping pattern that is the RO bundle (RO bundle) in the RO group may alternatively be another pattern. For example, the RO bundle may alternatively include another quantity of ROs in time domain, the value of "msg1-FDM" may alternatively be another value (for example, 4 or 8), and the RO bundle may alternatively correspond to or belong to a plurality of (for example, 3 or 4) adjacent slots. The frequency hopping pattern identified in the figure should not constitute any limitation on this embodiment of this application.

For example, the frequency hopping step (step) may be understood as the frequency domain resource size or the frequency domain resource length jumped over in a single frequency hopping process, that is, the frequency domain resource size jumped over at one time. For example, the frequency hopping step (step) may be determined based on a difference or a gap (gap) between a frequency domain position of an RO bundle after frequency hopping and a frequency domain position of the RO bundle before frequency hopping after frequency hopping ends. For example, the frequency hopping step (step) may be the gap (gap).

In this embodiment of this application, in a possible implementation, the frequency hopping step includes an integer multiple of a frequency domain resource size occupied by one RO in frequency domain, and a value of the frequency hopping step includes any one of 1, 2, 3, 4, 5, 6, or 7. In other words, a value range or set of the frequency hopping step includes 1, 2, 3, 4, 5, 6, and 7.

For example, if the value of the frequency hopping step is 3, it indicates that the frequency hopping step is three times the frequency domain resource size occupied by one RO in frequency domain.

In this embodiment of this application, in a possible implementation, when it is determined that frequency hopping needs to be performed on the ROs in the RO group, for example, if the time domain resource occupied by the (i+1)^{th} RO in the RO group and the time domain resource occupied by the i^{th} RO in the RO group do not belong to a same slot or do not belong to adjacent slots, a frequency domain position S of the (i+1)^{th} RO in the RO group after frequency hopping may be determined according to the following formula (1): 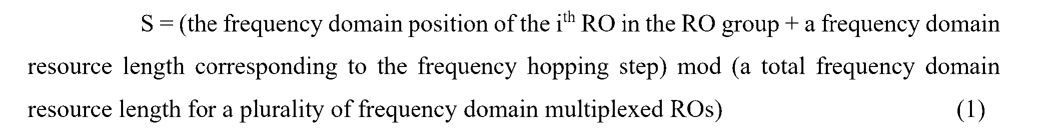 S = (the frequency domain position of the ith RO in the RO group + a frequency domain resource length corresponding to the frequency hopping step) mod (a total frequency domain resource length for a plurality of frequency domain multiplexed ROs)

In the formula (1), the value of i is a positive integer, and mod represents a modulo operation.

Alternatively, if the time domain resource occupied by the (i+1)^{th} RO in the RO group and the time domain resource occupied by the i^{th} RO in the RO group do not belong to a same slot or do not belong to adjacent slots, a frequency division multiplexing sequence number W of the (i+1)^{th} RO in the RO group after frequency hopping may be determined according to the following formula (2): 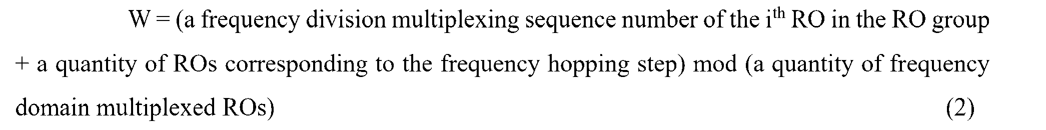 W = (a frequency division multiplexing sequence number of the ith RO in the RO group + a quantity of ROs corresponding to the frequency hopping step) mod (a quantity of frequency domain multiplexed ROs)

In the formula (2), the value of i is a positive integer, mod represents a modulo operation, and the frequency division multiplexing sequence number indicates that a frequency position of a specific RO corresponds to which FDM-RO among all frequency division multiplexed ROs at a same time point.

A frequency domain position of an Ro after frequency hopping is determined using the foregoing formulas, so that efficiency and accuracy of determining the frequency domain position of the Ro after frequency hopping can be improved.

Optionally, in this embodiment of this application, in a possible implementation, the RO frequency hopping manner in the RO group is predefined in the protocol, for example, a plurality of different frequency hopping patterns (frequency hopping manners) may be predefined in the protocol, and the terminal device and the network device may store these frequency hopping patterns. In this case, the network device may send indication information to the terminal device, where the indication information indicates an identifier of the RO frequency hopping pattern in the RO group. The terminal device may determine the frequency hopping manner (that is, performing frequency hopping with an RO bundle of a time-frequency resource size as the frequency hopping granularity using a frequency hopping step) of the ROs in the RO group based on the identifier of the RO frequency hopping manner in the RO group, to determine the time-frequency positions of the plurality of ROs in the RO group.

In another possible implementation, the network device may send indication information to the terminal device, where the indication information indicates the RO frequency hopping pattern in the RO group. For example, the indication information may indicate at least one of the frequency hopping step or a time-frequency resource size corresponding to the RO bundle. If the indication information indicates the frequency hopping step, the time-frequency resource size corresponding to the RO bundle may be predefined in the protocol; or if the indication information indicates the time-frequency resource size corresponding to the RO bundle, the frequency hopping step may be predefined in the protocol.

Optionally, in a possible implementation, after frequency hopping is enabled, if the network device indicates only the frequency hopping step to the terminal device, and does not indicate the time-frequency resource size corresponding to the RO bundle, that is, does not indicate the frequency hopping granularity in time domain (for example, the quantity of ROs in time domain), after frequency hopping is enabled, the terminal device may first determine a preset frequency hopping pattern (that is, performing frequency hopping with an RO bundle of a preset time-frequency resource size as the frequency hopping granularity using a preset frequency hopping step), then modify the preset frequency hopping pattern (modify the preset frequency hopping step) using the indicated frequency hopping step, to obtain a new frequency hopping pattern (that is, performing frequency hopping with the RO bundle of the preset time-frequency resource size as the frequency hopping granularity using a modified frequency hopping step), and determine the time-frequency positions of the plurality of ROs in the RO group using the new frequency hopping pattern.

Optionally, in another possible implementation, after frequency hopping is enabled, if the network device indicates only the time-frequency resource size corresponding to the RO bundle to the terminal device, and does not indicate the frequency hopping step, after frequency hopping is enabled, the terminal device may first determine a preset frequency hopping pattern (performing frequency hopping with an RO bundle of a preset time-frequency resource size as the frequency hopping granularity using a preset frequency hopping step), then modify the preset frequency hopping pattern (modify the preset time-frequency resource size corresponding to the RO bundle) using the indicated time-frequency resource size corresponding to the RO bundle, to obtain a new frequency hopping pattern (performing frequency hopping with a modified time-frequency resource size corresponding to the RO bundle as the frequency hopping granularity using the preset frequency hopping step), and determine the time-frequency positions of the plurality of ROs in the RO group using the new frequency hopping pattern.

Optionally, in this embodiment of this application, the time-frequency resource size corresponding to the RO bundle may also be understood as a size of a frequency hopping resource block granularity (frequency hopping granularity, FH-granularity), that is, a time-frequency resource size occupied by a frequency hopping unit granularity. The terminal device may determine the RO frequency hopping manner in the RO group based on the indication information, to determine the time-frequency positions of the plurality of ROs in the RO group.

The following describes, with reference to specific examples, the frequency hopping pattern with the RO bundle as the frequency hopping granularity.

FIG. 19 is a diagram of an example of the RO frequency hopping pattern in the RO group. In the example shown in FIG. 19, the RO group includes four ROs, and the RO bundle includes two ROs in time domain. A value of a parameter "msg1-FDM" is 2. In other words, there are two frequency domain ROs at a time domain position corresponding to one time domain RO. Each block represents one RO, and ROs with a same shadow shape represent ROs belonging to a same RO group. The frequency hopping step (step) is 1 (the frequency hopping step is a frequency domain resource length corresponding to one RO, or the frequency hopping step is one RO). FIG. 19 shows a pattern (manner) of performing frequency hopping with the RO bundle as the frequency hopping granularity (two ROs in time domain as the granularity) using the frequency hopping step (step) of 1.

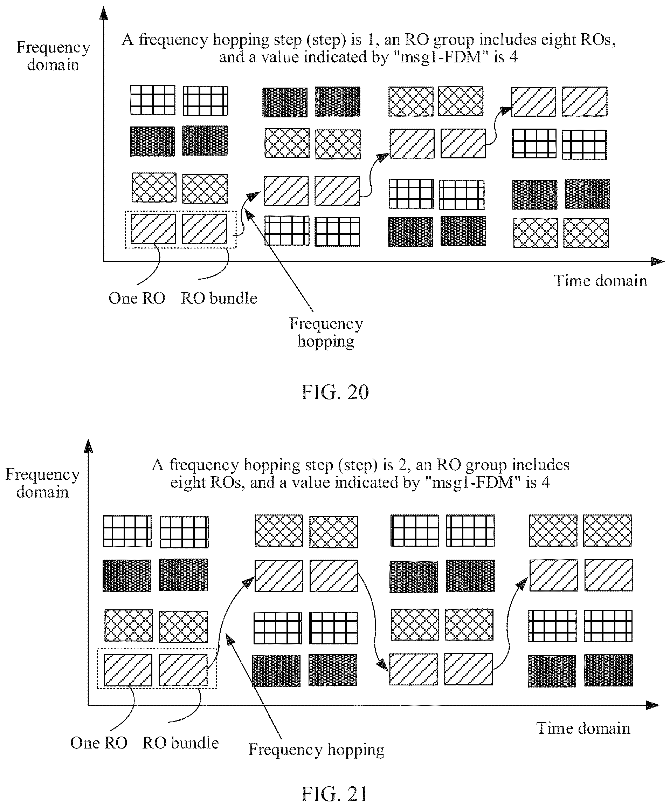

FIG. 20 is a diagram of another example of the RO frequency hopping pattern in the RO group. In the example shown in FIG. 20, the RO group includes eight ROs, and the RO bundle includes two ROs in time domain. A value of a parameter "msg1-FDM" is 4. In other words, there are four frequency domain ROs at a time domain position corresponding to one time domain RO. Each block represents one RO, and ROs with a same shadow shape represent ROs belonging to a same RO group. The frequency hopping step (step) is 1 (the frequency hopping step is a frequency domain resource length corresponding to one RO, or the frequency hopping step is one RO). FIG. 20 shows a pattern (manner) of performing frequency hopping with the RO bundle as the frequency hopping granularity (two ROs in time domain as the granularity) using the frequency hopping step (step) of 1.

FIG. 21 is a diagram of another example of the RO frequency hopping pattern in the RO group. In the example shown in FIG. 21, the RO group includes eight ROs, and the RO bundle includes two ROs in time domain. A value of a parameter "msg1-FDM" is 4. In other words, there are four frequency domain ROs at a time domain position corresponding to one time domain RO. Each block represents one RO, and ROs with a same shadow shape represent ROs belonging to a same RO group. The frequency hopping step (step) is 2 (the frequency hopping step is a frequency domain resource length corresponding to two ROs, or the frequency hopping step is two ROs). FIG. 21 shows a pattern (manner) of performing frequency hopping with the RO bundle as the frequency hopping granularity (two ROs in time domain as the granularity) using the frequency hopping step (step) of 2.

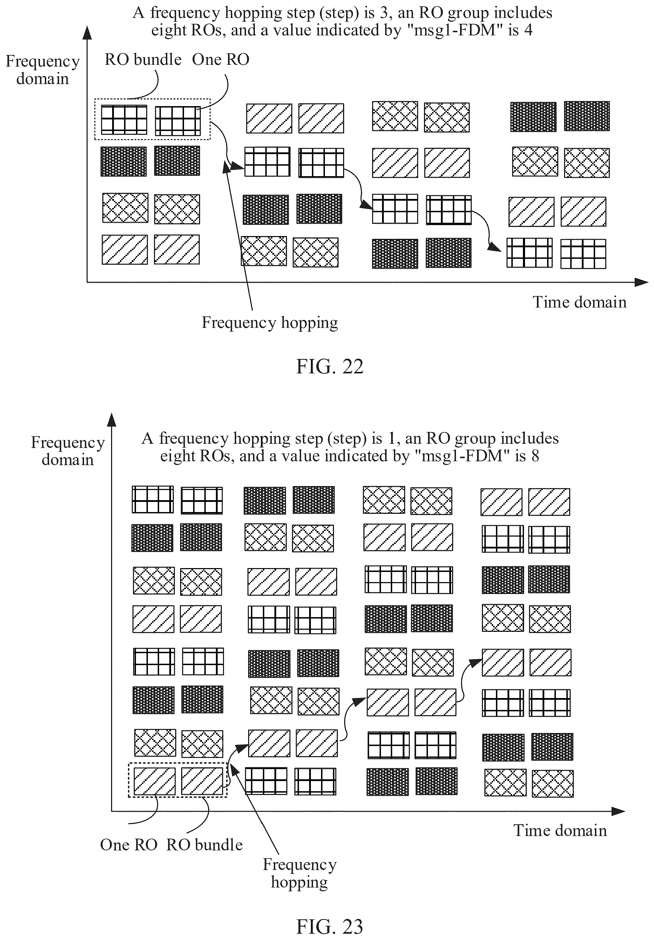

FIG. 22 is a diagram of another example of the RO frequency hopping pattern in the RO group. In the example shown in FIG. 22, the RO group includes eight ROs, and the RO bundle includes two ROs in time domain. A value of a parameter "msg1-FDM" is 4. In other words, there are four frequency domain ROs on one time domain RO. Each block represents one RO, and ROs with a same shadow shape represent ROs belonging to a same RO group. The frequency hopping step (step) is 3 (the frequency hopping step is a frequency domain resource length corresponding to three ROs, or the frequency hopping step is three ROs). FIG. 22 shows a pattern (manner) of performing frequency hopping with the RO bundle as the frequency hopping granularity (two ROs in time domain as the granularity) using the frequency hopping step (step) of 3.

It should be understood that the frequency hopping pattern (shown in FIG. 20) in which the RO group includes eight ROs (8-RO-group), the value of "msg1-FDM" is 4, and step=3 is symmetric with (or equivalently the same as) the frequency hopping pattern (shown in FIG. 22) of the 8-RO-group in which the value of "msg1-FDM" is 4 and step=1 along a frequency domain midline (that is, a straight line in which a time domain axis is located). There are also other symmetric frequency hopping patterns: a frequency hopping pattern in which the RO group includes four ROs (4-RO-group), the value of "msg1-FDM" is 4, and step=1; and a frequency hopping pattern of the 4-RO-group in which the value of "msg1-FDM" is 4 and step=3.

FIG. 23 is a diagram of another example of the RO frequency hopping pattern in the RO group. In the example shown in FIG. 23, the RO group includes eight ROs, and the RO bundle includes two ROs in time domain. A value of a parameter "msg1-FDM" is 8. In other words, there are eight frequency domain ROs at a time domain position corresponding to one time domain RO. Each block represents one RO, and ROs with a same shadow shape represent ROs belonging to a same RO group. The frequency hopping step (step) is 1 (the frequency hopping step is a frequency domain resource length corresponding to one RO, or the frequency hopping step is one RO). FIG. 23 shows a pattern (manner) of performing frequency hopping with the RO bundle as the frequency hopping granularity (two ROs in time domain as the granularity) using the frequency hopping step (step) of 1.

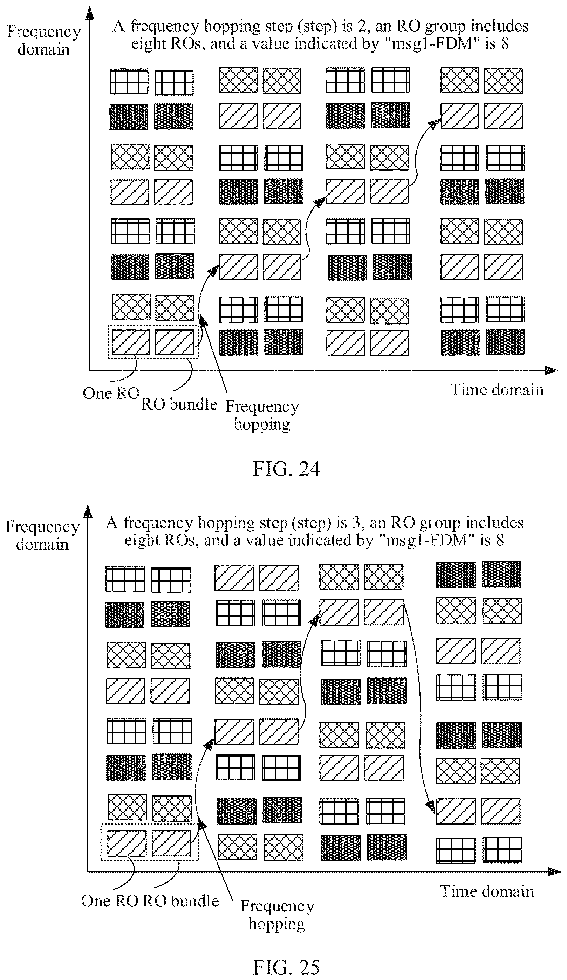

FIG. 24 is a diagram of another example of the RO frequency hopping pattern in the RO group. In the example shown in FIG. 24, the RO group includes eight ROs, and the RO bundle includes two ROs in time domain. A value of a parameter "msg1-FDM" is 8. In other words, there are eight frequency domain ROs at a time domain position corresponding to one time domain RO. Each block represents one RO, and ROs with a same shadow shape represent ROs belonging to a same RO group. The frequency hopping step (step) is 2 (the frequency hopping step is a frequency domain resource length corresponding to two ROs, or the frequency hopping step is two ROs). FIG. 24 shows a pattern (manner) of performing frequency hopping with the RO bundle as the frequency hopping granularity (two ROs in time domain as the granularity) using the frequency hopping step (step) of 2. It should be understood that as shown in FIG. 24, frequency hopping is also performed between two RO groups. However, it should be understood that frequency hopping may not be performed between ROs in two RO groups (that is, frequency hopping may not be performed between RO groups).

FIG. 25 is a diagram of another example of the RO frequency hopping pattern in the RO group. In the example shown in FIG. 25, the RO group includes eight ROs, and the RO bundle includes two ROs in time domain. A value of a parameter "msg1-FDM" is 8. In other words, there are eight frequency domain ROs at a time domain position corresponding to one time domain RO. Each block represents one RO, and ROs with a same shadow shape represent ROs belonging to a same RO group. The frequency hopping step (step) is 3 (the frequency hopping step is a frequency domain resource length corresponding to three ROs, or the frequency hopping step is three ROs). FIG. 25 shows a pattern (manner) of performing frequency hopping with the RO bundle as the frequency hopping granularity (two ROs in time domain as the granularity) using the frequency hopping step (step) of 3. It should be understood that as shown in FIG. 25, frequency hopping is also performed between two RO groups. However, it should be understood that frequency hopping may not be performed between ROs in two RO groups (that is, frequency hopping may not be performed between RO groups).

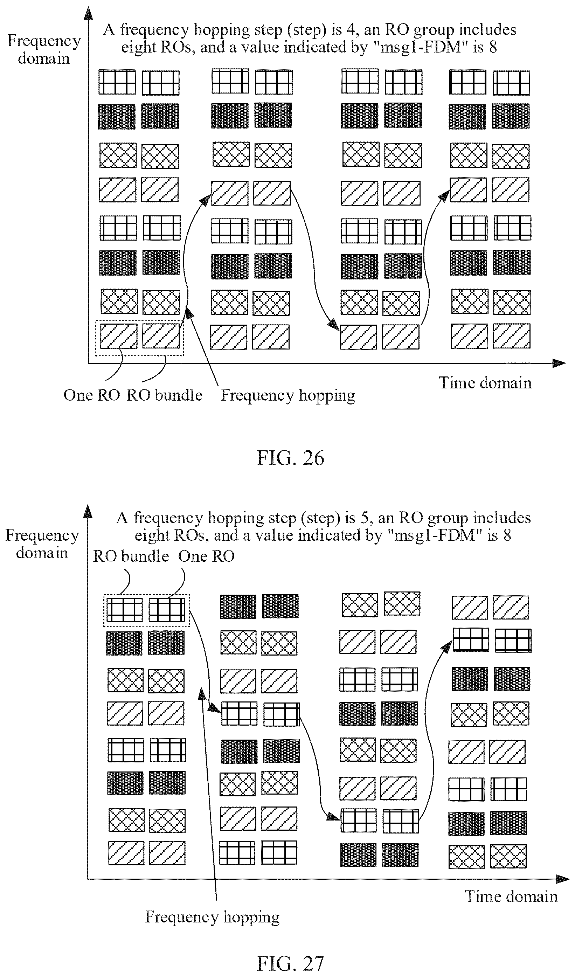

FIG. 26 is a diagram of another example of the RO frequency hopping pattern in the RO group. In the example shown in FIG. 26, the RO group includes eight ROs, and the RO bundle includes two ROs in time domain. A value of a parameter "msg1-FDM" is 8. In other words, there are eight frequency domain ROs at a time domain position corresponding to one time domain RO. Each block represents one RO, and ROs with a same shadow shape represent ROs belonging to a same RO group. The frequency hopping step (step) is 4 (the frequency hopping step is a frequency domain resource length corresponding to four ROs, or the frequency hopping step is four ROs). FIG. 26 shows a pattern (manner) of performing frequency hopping with the RO bundle as the frequency hopping granularity (two ROs in time domain as the granularity) using the frequency hopping step (step) of 4.

FIG. 27 is a diagram of another example of the RO frequency hopping pattern in the RO group. In the example shown in FIG. 27, the RO group includes eight ROs, and the RO bundle includes two ROs in time domain. A value of a parameter "msg1-FDM" is 8. In other words, there are eight frequency domain ROs at a time domain position corresponding to one time domain RO. Each block represents one RO, and ROs with a same shadow shape represent ROs belonging to a same RO group. The frequency hopping step (step) is 5 (the frequency hopping step is a frequency domain resource length corresponding to five ROs, or the frequency hopping step is five ROs). FIG. 27 shows a pattern (manner) of performing frequency hopping with the RO bundle as the frequency hopping granularity (two ROs in time domain as the granularity) using the frequency hopping step (step) of 5.

It should be understood that the frequency hopping pattern (shown in FIG. 25) in which the RO group includes eight ROs (8-RO-group), the value of "msg1-FDM" is 8, and step=3 is symmetric with (or equivalently the same as) the frequency hopping pattern (shown in FIG. 27) of the 8-RO-group in which the value of "msg1-FDM" is 8 and step=5 along a frequency domain midline (that is, a straight line in which a time domain axis is located). There are also other symmetric frequency hopping patterns: A frequency hopping pattern in which the RO group includes eight ROs (8-RO-group), a value of "msg1-FDM" is 8, and step=1 is symmetric with (or equivalently the same as) a frequency hopping pattern of the 8-RO-group in which the value of "msg1-FDM" is 8 and step=7 along a frequency domain midline (that is, a straight line in which a time domain axis is located). A frequency hopping pattern in which the RO group includes eight ROs (8-RO-group), the value of "msg1-FDM" is 8, and step=2 is symmetric with (or equivalently the same as) a frequency hopping pattern of the 8-RO-group in which a value of "msg1-FDM" is 8 and step=6 along a frequency domain midline (that is, a straight line in which a time domain axis is located).

With reference to frequency hopping manners of the ROs in the RO group under different configuration parameters (the quantity of ROs in the RO group, the value of "msg1-FDM", the value of the frequency hopping step, and the like), frequency diversity (diversity) values corresponding to the frequency hopping manners may be obtained. The frequency diversity value represents a quantity of independent channels for repeated preamble transmission in one RO group, and a larger quantity indicates a higher frequency diversity gain. The quantity of independent channel is a quantity of ROs with different frequency positions. Because a frequency position size occupied by an RO may be six RBs or 12 RBs, channels corresponding to ROs at different frequency positions are different, and preambles sent on the ROs at different frequency positions experience different channels, which can improve the frequency diversity (diversity).

For example, in the example shown in FIG. 19, the RO group includes four ROs, the value of the parameter "msg1-FDM" is 2, the frequency hopping step (step) is 1, and a corresponding frequency diversity (diversity) value is 2.

For another example, in the example shown in FIG. 20, the RO group includes four ROs, the value of the parameter "msg1-FDM" is 4, the frequency hopping step (step) is 1, and a corresponding frequency diversity (diversity) value is 4. In the example shown in FIG. 21, the RO group includes four ROs, the value of the parameter "msg1-FDM" is 4, the frequency hopping step (step) is 2, and a corresponding frequency diversity (diversity) value is 2. In the example shown in FIG. 22, the RO group includes four ROs, the value of the parameter "msg1-FDM" is 4, the frequency hopping step (step) is 3, and a corresponding frequency diversity (diversity) value is 4.

For another example, in the example shown in FIG. 23, the RO group includes eight ROs, the value of the parameter "msg1-FDM" is 8, the frequency hopping step (step) is 1, and a corresponding frequency diversity (diversity) value is 4. In the example shown in FIG. 24, the RO group includes eight ROs, the value of the parameter "msg1-FDM" is 8, the frequency hopping step (step) is 2, and a corresponding frequency diversity (diversity) value is 4. In the example shown in FIG. 25, the RO group includes eight ROs, the value of the parameter "msg1-FDM" is 8, the frequency hopping step (step) is 3, and a corresponding frequency diversity (diversity) value is 4. In the example shown in FIG. 26, the RO group includes eight ROs, the value of the parameter "msg1-FDM" is 8, the frequency hopping step (step) is 4, and a corresponding frequency diversity (diversity) value is 2. In the example shown in FIG. 27, the RO group includes eight ROs, the value of the parameter "msg1-FDM" is 8, the frequency hopping step (step) is 5, and a corresponding frequency diversity (diversity) value is 4.

For different configuration parameters, a summary is presented as shown in Table 1 and Table 2. Table 1 shows a frequency diversity (diversity) value achieved through frequency hopping with a granularity of one time domain RO. Table 2 shows a frequency diversity (diversity) value achieved through frequency hopping with a granularity of two time domain ROs.

**Table 1 Frequency diversity (diversity) value achieved through frequency hopping with a granularity of one time domain RO**

| Value of "msg1-FDM" or quantity of ROs multiplexed in frequency domain | RO group including two ROs | RO group including four ROs | RO group including eight ROs |
|---|---|---|---|
| FDM=2 | The frequency hopping step (step) is 1, and the frequency diversity (diversity) value is 2 | The frequency hopping step (step) is 1, and the frequency diversity (diversity) value is 2 | The frequency hopping step (step) is 1, and the frequency diversity (diversity) value is 2 |
| FDM=4 | The frequency hopping step (step) is 1 or 3, and the frequency diversity (diversity) value is 2; and | The frequency hopping step (step) is 1 or 3, and the frequency diversity (diversity) value is 4; and | The frequency hopping step (step) is 1 or 3, and the frequency diversity (diversity) value is 4; and |
| | the frequency hopping step (step) is 2, and the frequency diversity (diversity) value is 2 | the frequency hopping step (step) is 2, and the frequency diversity (diversity) value is 2 | the frequency hopping step (step) is 2, and the frequency diversity (diversity) value is 2 |
| FDM=8 | The frequency hopping step (step) is 1, 3, 5, or 7, and the frequency diversity (diversity) value is 2; | The frequency hopping step (step) is 1, 3, 5, or 7, and the frequency diversity (diversity) value is 4; | The frequency hopping step (step) is 1, 3, 5, or 7, and the frequency diversity (diversity) value is 8; |
| | the frequency hopping step (step) is 2 or 6, and the frequency diversity (diversity) value is 2; and | the frequency hopping step (step) is 2 or 6, and the frequency diversity (diversity) value is 4; and | the frequency hopping step (step) is 2 or 6, and the frequency diversity (diversity) value is 4; and |
| | the frequency hopping step (step) is 4, and the frequency diversity (diversity) value is 2 | the frequency hopping step (step) is 4, and the frequency diversity (diversity) value is 2 | the frequency hopping step (step) is 4, and the frequency diversity (diversity) value is 2 |

**Table 2 Frequency diversity (diversity) value achieved through frequency hopping with a granularity of two time domain ROs**

| Value of "msg1-FDM" or quantity of ROs multiplexed in frequency domain | RO group including two ROs | RO group including four ROs | RO group including eight ROs |
|---|---|---|---|
| FDM=2 | The frequency hopping step (step) is 1, and the frequency diversity (diversity) value is 2 | The frequency hopping step (step) is 1, and the frequency diversity (diversity) value is 2 | The frequency hopping step (step) is 1, and the frequency diversity (diversity) value is 2 |
| FDM=4 | The frequency hopping step (step) is 1 or 3, and the frequency diversity (diversity) value is 1; and | The frequency hopping step (step) is 1 or 3, and the frequency diversity (diversity) value is 2; and | The frequency hopping step (step) is 1 or 3, and the frequency diversity (diversity) value is 4; and |
| | the frequency hopping step (step) is 2, and the frequency diversity (diversity) value is 1 | the frequency hopping step (step) is 2, and the frequency diversity (diversity) value is 2 | the frequency hopping step (step) is 2, and the frequency diversity (diversity) value is 2 |
| FDM=8 | The frequency hopping step (step) is 1, 3, 5, or 7, and the frequency diversity (diversity) value is 1; | The frequency hopping step (step) is 1, 3, 5, or 7, and the frequency diversity (diversity) value is 2; | The frequency hopping step (step) is 1, 3, 5, or 7, and the frequency diversity (diversity) value is 4; |
| | the frequency hopping step (step) is 2 or 6, and the frequency diversity (diversity) value is 1; and | the frequency hopping step (step) is 2 or 6, and the frequency diversity (diversity) value is 2; and | the frequency hopping step (step) is 2 or 6, and the frequency diversity (diversity) value is 4; and |
| | the frequency hopping step (step) is 4, and the frequency diversity (diversity) value is 1 | the frequency hopping step (step) is 4, and the frequency diversity (diversity) value is 2 | the frequency hopping step (step) is 4, and the frequency diversity (diversity) value is 2 |

For example, it can be learned from Table 1 that for the RO group including eight ROs, when FDM=8, there are seven frequency hopping steps whose values are 1, 7, 2, 6, 3, 5, and 4, and if a value 0 of the frequency hopping step is added, there are a maximum of eight frequency hopping steps. If the value of the frequency hopping step is 0, it indicates that no frequency hopping is performed. Frequency hopping patterns corresponding to the values 1 and 7 of the frequency hopping step are equivalently the same. Frequency hopping patterns corresponding to the values 2 and 6 of the frequency hopping step are equivalently the same. Frequency hopping patterns corresponding to the values 3 and 5 of the frequency hopping step are equivalently the same. If the network device indicates the frequency hopping step by sending the indication information to the terminal device, a length of the indication information needs to be 3 bits (bit). With reference to the example shown in Table 1, in which the RO group includes eight ROs and FDM=8, if only frequency hopping steps (the frequency hopping steps are 1, 3, 5, and 7) corresponding to a maximum value (that is, 8) of the frequency diversity (diversity) value are reserved, there are four frequency hopping steps in total, and if the frequency hopping step 0 used when no frequency hopping is performed is added, there are five frequency hopping steps in total. In this case, the length of the indication information needs to be 3 bits (bit). If only frequency hopping steps (the frequency hopping steps are 2 and 6) corresponding to the frequency diversity (diversity) value 4 are reserved, there are two frequency hopping steps in total, and if the frequency hopping step 0 used when no frequency hopping is performed is added, there are three frequency hopping steps in total. In this case, the length of the indication information needs to be 2 bits (bit).

It can be learned that if the network device indicates the frequency hopping step by sending the indication information to the terminal device, the length of the indication information may be 2 bits (bit) or 3 bits (bit).

For another example, if any one of the following value sets of the frequency hopping step is predefined in the protocol:
{1, 2, 4, 5}, {1, 2, 4, 3}, {7, 2, 4, 3}, {7, 6, 4, 5}, {1, 6, 4, 5}, {1, 6, 4, 3}, {7, 6, 4, 3}, and {7, 6, 4, 5}, when indicating the value of the frequency hopping step to the terminal device using the indication information, the network device may indicate one frequency hopping step in any one of the foregoing sets, where the set needs to indicate four frequency hopping steps in total, so that the length of the indication information needs to be 2 bits (bit).

For another example, if any one of four sets {1, 5}, {1, 3}, {7, 3}, and {7, 5} of the values 1, 3, 5, and 7 of the frequency hopping step is reserved in the protocol, when indicating the value of the frequency hopping step to the terminal device using the indication information, the network device may indicate one frequency hopping step in any one of the foregoing sets, where the set needs to indicate two frequency hopping steps in total, so that the length of the indication information needs to be 1 bit (bit). If the value 0 of the frequency hopping step used when no frequency hopping is performed is added, there are three frequency hopping steps in total, and the length of the indication information needs to be 2 bits (bit).

For another example, with reference to the example shown in Table 1, in which the RO group includes eight ROs and FDM=8, if only frequency hopping steps (values of the frequency hopping steps are 2 and 6) corresponding to the frequency diversity (diversity) value 4 are reserved in the protocol, there are two frequency hopping steps in total, and the length of the indication information needs to be 1 bit (bit).

Optionally, in a possible implementation, the frequency hopping patterns corresponding to the values 1 and 7 of the frequency hopping step are equivalently the same, the frequency hopping patterns corresponding to the values 2 and 6 of the frequency hopping step are equivalently the same, and the frequency hopping patterns corresponding to the values 3 and 5 of the frequency hopping step are equivalently the same. Therefore, if indicating the frequency hopping step by sending the indication information to the terminal device, the network device only needs to select one of the frequency hopping steps whose values are 1 and 7 for indication, select one of the frequency hopping steps whose values are 2 and 6 for indication, and select one of the frequency hopping steps whose values are 3 and 5 for indication. In this way, a total quantity of steps that need to be indicated can be reduced, so that the length of the indication information can be reduced.

Optionally, in this embodiment of this application, in a possible implementation, it can be learned from Table 1 and Table 2 that maximum values of the frequency diversity (diversity) values corresponding to the value 1 of the frequency hopping step under different configuration parameters (the quantity of ROs in the RO group and the value of "msg1-FDM") may be obtained.

For example, in Table 1, when the value of "msg1-FDM" is 4, the quantity of ROs in the RO group is 2, 4, and 8, and the value of the frequency hopping step is 1, maximum values of the frequency diversity (diversity) in the corresponding RO group can be obtained. For example, when the quantity of ROs in the RO group is 2, and the value of the frequency hopping step is 1, the maximum value of the frequency diversity (diversity) is 2; when the quantity of ROs in the RO group is 4, and the value of the frequency hopping step is 1, the maximum value of the frequency diversity (diversity) is 4; and when the quantity of ROs in the RO group is 8, and the value of the frequency hopping step is 1, the maximum value of the frequency diversity is 4.

For another example, in Table 2, when the value of "msg1-FDM" is 8, the quantity of ROs in the RO group is 2, 4, and 8, and the value of the frequency hopping step is 1, maximum values of the frequency diversity (diversity) in the corresponding RO group can be obtained. For example, when the quantity of ROs in the RO group is 2, and the value of the frequency hopping step is 1, the maximum value of the frequency diversity (diversity) is 1; when the quantity of ROs in the RO group is 4, the maximum value of the frequency diversity (diversity) is 2; and when the quantity of ROs in the RO group is 8, the maximum value of the frequency diversity is 4.

When the value of "msg1-FDM" is 8, for a same RO group, a frequency hopping pattern corresponding to step=1 and a frequency hopping pattern corresponding to step=7 are equivalently the same. Therefore, if the network device indicates the frequency hopping step by sending the indication information to the terminal device, the length of the indication information may also be 1 bit. In this case, the indication information indicates performing frequency hopping using the frequency hopping step whose value is 1 or 7, or performing no frequency hopping (that is, disabling frequency hopping). The value of the frequency hopping step represents a multiple of the frequency domain resource size occupied by one RO in frequency domain. For example, if a value of the bit corresponding to the indication information is 1, it indicates performing frequency hopping using the frequency hopping step whose value is 1 or 7; or if a value of the bit for the indication information is 0, it indicates performing no frequency hopping. Alternatively, if a value of the bit for the indication information is 0, it indicates performing frequency hopping using the frequency hopping step whose value is 1 or 7; or if a value of the bit for the indication information is 1, it indicates performing no frequency hopping.

According to the transmission method provided in this application, for a plurality of ROs in a same RO group, an RO bundle (bundle) is used as a frequency hopping granularity. The RO bundle may include a plurality of ROs in time domain, and the plurality of ROs in the RO bundle correspond to a same frequency domain position (that is, no frequency hopping is performed). When frequency hopping is performed in a frequency hopping manner in which the RO bundle is used as the granularity, because preambles in one RO bundle experience a same (close) channel and phase jump, coherent combination may be first performed on preamble sequences transmitted separately on ROs in one RO bundle, where coherent combination can improve average power of a to-be-detected sequence; and then a combined sequence is used for detection, to improve a preamble detection success probability. Frequency hopping may be performed on preamble sequences transmitted on different RO bundles. Frequency hopping can reduce a probability that all channels for repeated preamble transmission are in deep fading (that is, not in deep fading). Therefore, a frequency diversity (diversity) gain can be improved. In other words, a frequency hopping gain and a coherent detection gain are combined. In addition, if the network device indicates the frequency hopping step by sending the indication information to the terminal device, the length of the indication information may be 2 bits (bit), 3 bits (bit), or 1 bit, so that the frequency hopping step is indicated with low signaling overheads, saving communication resources.

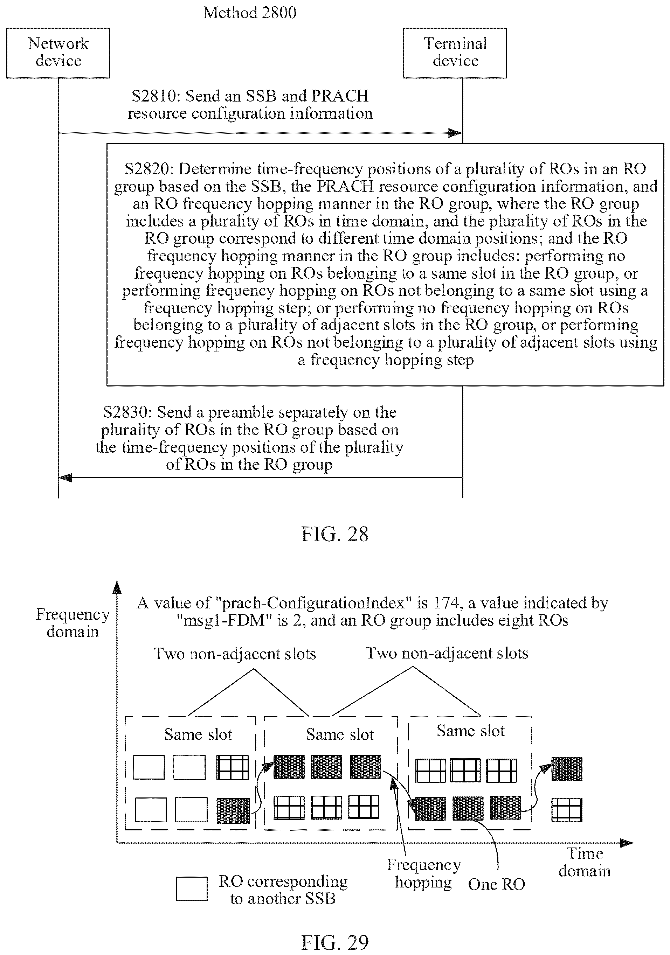

FIG. 28 is a diagram of interaction in a transmission method according to another embodiment of this application. As shown in FIG. 28, the method 2800 shown in FIG. 28 may include S2810 to S2830. The following describes the steps in the method 2800 in detail with reference to FIG. 28.

S2810: A network device sends an SSB and PRACH resource configuration information to a terminal device.

Correspondingly, the terminal device receives the SSB and the PRACH resource configuration information.

For specific descriptions of S2810, refer to the descriptions of S1410. For brevity, details are not described herein again.

S2820: The terminal device determines time-frequency positions of a plurality of ROs in an RO group based on the SSB, the PRACH resource configuration information, and an RO frequency hopping manner in the RO group, where the RO group includes a plurality of ROs in time domain, and the plurality of ROs in the RO group correspond to different time domain positions; and the RO frequency hopping manner in the RO group includes: performing no frequency hopping on ROs belonging to a same slot in the RO group, or performing frequency hopping on ROs not belonging to a same slot using a frequency hopping step; or performing no frequency hopping on ROs belonging to a plurality of adjacent slots in the RO group, or performing frequency hopping on ROs not belonging to a plurality of adjacent slots using a frequency hopping step.

For example, in S2820, the terminal device may determine the time-frequency positions of the ROs in the RO group based on an association relationship between the received SSB and the RO, a mapping relationship between the SSB and the RO, the PRACH resource configuration information (for example, including the quantity of ROs included in the RO group and the time-frequency position of the first RO in the RO group), the frequency hopping manner, and the like.

For a specific process in which the terminal device determines the time-frequency positions of the plurality of ROs in the RO group based on the SSB, the PRACH resource configuration information, and the RO frequency hopping manner in the RO group, refer to the specific descriptions of S 1420. A difference lies in that the frequency hopping manner in S2820 is different from the frequency hopping manner in S1420. The following describes the frequency hopping manner in S2820.

It should be understood that in this embodiment of this application, the same slot or the plurality of adjacent slots may be understood as a same PRACH slot (slot) or a plurality of adjacent PRACH slots (slot).

It should be further understood that in this embodiment of this application, the plurality of adjacent slots may be understood as that sequence numbers of the plurality of slots are adjacent or consecutive. For example, a PRACH slot 2 and a PRACH slot 3 are two adjacent or consecutive slots.

In this embodiment of this application, in a possible implementation, in the method 2800, whether to perform frequency hopping on the RO in the RO group may be determined in one or more of the following four manners (or rules).

First, no frequency hopping is performed on ROs belonging to a same slot in the RO group (ROs in a same slot correspond to a same frequency domain position), and frequency hopping is performed normally in other cases.

Second, frequency hopping is performed on ROs not belonging to a same slot in the RO group using the frequency hopping step (ROs in different slots correspond to different frequency domain positions).

Third, no frequency hopping is performed on ROs belonging to a plurality of adjacent slots in the RO group (ROs in a plurality of adjacent slots correspond to a same frequency domain position), frequency hopping is performed normally in other cases.

Fourth, frequency hopping is performed on ROs not belonging to a plurality of adjacent slots in the RO group using the frequency hopping step (ROs in a plurality of non-adjacent slots correspond to different frequency domain positions).

S2830: The terminal device sends a preamble separately on the plurality of ROs in the RO group based on the time-frequency positions of the plurality of ROs in the RO group.

For example, when the terminal device sends the preamble separately (or sends the preamble repeatedly) on the plurality of ROs in the RO group, no frequency hopping is performed on ROs belonging to a same slot in the RO group, or frequency hopping is performed on ROs not belonging to a same slot using the frequency hopping step; or no frequency hopping is performed on ROs belonging to a plurality of adjacent slots in the RO group, or frequency hopping is performed on ROs not belonging to a plurality of adjacent slots using the frequency hopping step. In other words, preambles in a same slot or adjacent slots experience a same (close) channel and phase jump. Therefore, after the network device receives the preamble separately at the time-frequency positions of the plurality of ROs in the RO group, coherent combination may be first performed on preamble sequences in a same slot or adjacent slots (the adjacent slots correspond to close channels), and then a combined sequence is used for detection, to improve a preamble detection success probability. Frequency hopping may be performed on preamble sequences in different slots or non-adjacent slots. Frequency hopping can reduce a probability that all channels for repeated preamble transmission are in deep fading (that is, not in deep fading). Therefore, a frequency diversity (diversity) gain can be improved. In other words, a frequency hopping gain and a coherent detection gain are combined.

For descriptions of the frequency hopping step, refer to the foregoing descriptions related to the frequency hopping step. For brevity, details are not described herein again.

The following describes the RO frequency hopping manner in the RO group with reference to specific examples.

For example, FIG. 29 is a diagram of another example of an RO frequency hopping pattern in the RO group. In the example shown in FIG. 29, the RO group includes eight ROs. A value indicated by "prach-ConfigurationIndex" sent by the network device is 174. A value of a parameter "msg1-FDM" is 2. In other words, there are two frequency domain ROs at a time domain position corresponding to one time domain RO. Each block represents one RO, and ROs with a same shadow shape represent ROs belonging to a same RO group. It can be learned from FIG. 29 that for a same RO group, no frequency hopping is performed on ROs belonging to a same slot, that is, a plurality of ROs in a same slot correspond to a same frequency domain position; and frequency hopping needs to be performed on ROs in two non-adjacent slots, that is, frequency hopping needs to be performed between two ROs not belonging to a same slot.

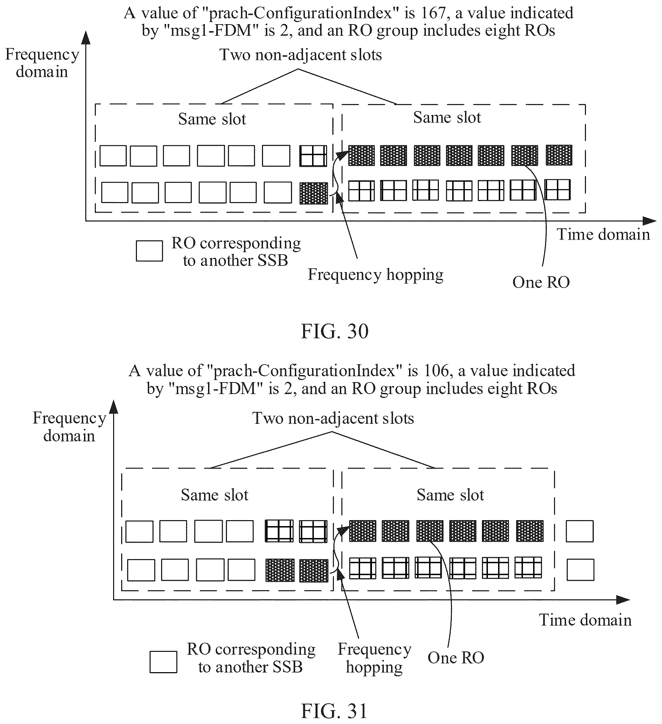

FIG. 30 is a diagram of another example of an RO frequency hopping pattern in the RO group. In the example shown in FIG. 30, the RO group includes eight ROs. A value indicated by "prach-ConfigurationIndex" sent by the network device is 167. A value of a parameter "msg1-FDM" is 2. In other words, there are two frequency domain ROs at a time domain position corresponding to one time domain RO. Each block represents one RO, and ROs with a same shadow shape represent ROs belonging to a same RO group. It can be learned from FIG. 30 that for a same RO group, no frequency hopping is performed on ROs belonging to a same slot, that is, a plurality of ROs in a same slot correspond to a same frequency domain position; and frequency hopping needs to be performed on ROs in two non-adjacent slots, that is, frequency hopping needs to be performed between two ROs not belonging to a same slot, where the two ROs correspond to different frequency domain positions.

FIG. 31 is a diagram of another example of an RO frequency hopping pattern in the RO group. In the example shown in FIG. 31, the RO group includes eight ROs. A value indicated by "prach-ConfigurationIndex" sent by the network device is 106. A value of a parameter "msg1-FDM" is 2. In other words, there are two frequency domain ROs at a time domain position corresponding to one time domain RO. Each block represents one RO, and ROs with a same shadow shape represent ROs belonging to a same RO group. It can be learned from FIG. 31 that for a same RO group, no frequency hopping is performed on ROs belonging to a same slot, that is, a plurality of ROs in a same slot correspond to a same frequency domain position; and frequency hopping needs to be performed on ROs in two non-adjacent slots, that is, frequency hopping needs to be performed between two ROs not belonging to a same slot, where the two ROs correspond to different frequency domain positions.

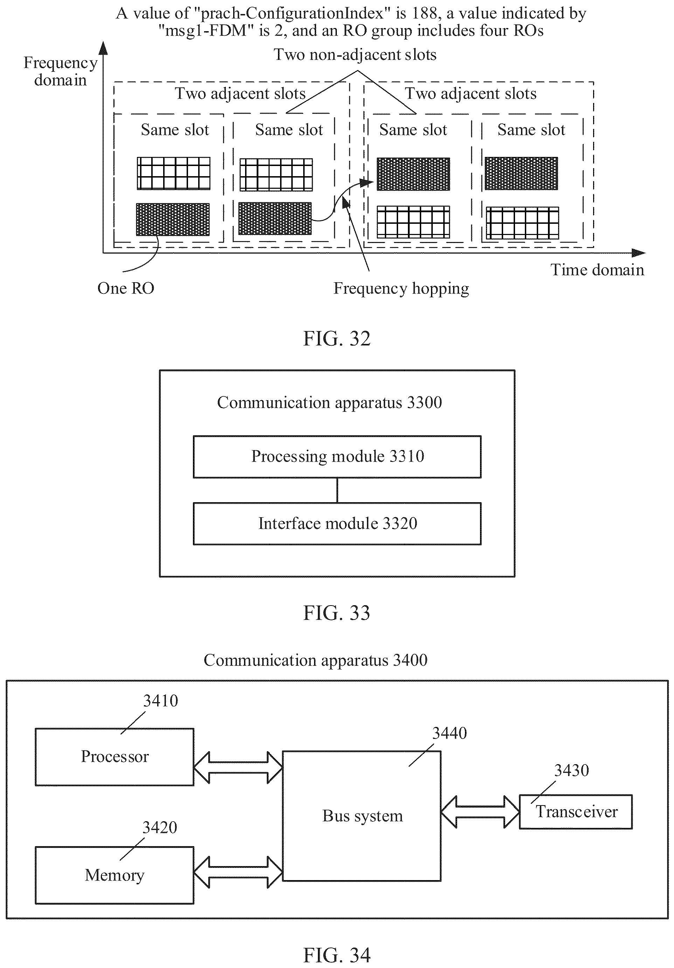

FIG. 32 is a diagram of another example of an RO frequency hopping pattern in the RO group. In the example shown in FIG. 32, the RO group includes four ROs. A value indicated by "prach-ConfigurationIndex" sent by the network device is 188. A value of a parameter "msg1-FDM" is 2. In other words, there are two frequency domain ROs at a time domain position corresponding to one time domain RO. Each block represents one RO, and ROs with a same shadow shape represent ROs belonging to a same RO group. It can be learned from FIG. 32 that for a same RO group, no frequency hopping is performed on ROs belonging to two adjacent slots, that is, a plurality of ROs in two adjacent slots correspond to a same frequency domain position; and frequency hopping needs to be performed on ROs not belonging to two adjacent slots, that is, ROs not belonging to two adjacent slots correspond to different frequency domain positions.

It should be understood that in the foregoing, no frequency hopping is performed on ROs belonging to two adjacent slots in the RO group, and frequency hopping is performed on ROs not belonging to two adjacent slots using the frequency hopping step However, in another implementation of this application, no frequency hopping is performed on ROs belonging to a plurality of (for example, three or four) adjacent slots in the RO group. In other words, the ROs in the plurality of adjacent slots correspond to a same frequency domain position; and frequency hopping is performed on ROs not belonging to a plurality of (for example, three or four) adjacent slots using the frequency hopping step, that is, ROs not belonging to a plurality of non-adjacent slots correspond to different frequency domain positions.

Optionally, in this embodiment of this application, the terminal device may determine, in the following manner, whether frequency hopping needs to be performed on the RO in the RO group.

If a time domain resource occupied by an (i+1)^{th} RO in the RO group and a time domain resource occupied by an i^{th} RO in the RO group belong to a same slot or adjacent slots, the i^{th} RO and the (i+1)^{th} RO in the RO group correspond to a same frequency domain position, where a value of i is a positive integer.

If a time domain resource occupied by an (i+1)^{th} RO in the RO group and a time domain resource occupied by an i^{th} RO in the RO group do not belong to a same slot or do not belong to adjacent slots, frequency hopping is performed on the (i+1)^{th} RO in the RO group relative to the i^{th} RO based on the frequency hopping step.

For example, for any RO group, a first RO (optionally, i corresponding to the first RO may be 0) in the RO group is known. For a second RO in the RO group, if a time domain resource occupied by the second RO and a time domain resource occupied by the first RO belong to a same slot or adjacent slots, that is, if the second RO and the first RO belong to a same slot or adjacent slots, no frequency hopping is performed on the second RO relative to the first RO, and the second RO and the first RO correspond to a same frequency domain position. In other words, no frequency hopping is performed on ROs in a same slot or a plurality of adjacent slots.

If a time domain resource occupied by the second RO and a time domain resource occupied by the first RO do not belong to a same slot or adjacent slots, that is, if the second RO and the first RO do not belong to a same slot or adjacent slots, frequency hopping is performed on the second RO relative to the first RO using the frequency hopping step. In other words, frequency hopping needs to be performed between ROs not belonging to a same slot, or frequency hopping needs to be performed between ROs not belonging to two adjacent slots.

Whether frequency hopping needs to be performed on the RO in the RO is determined in the foregoing manner, so that it can be ensured that no frequency hopping is performed on ROs belonging to a same slot in the RO group, or frequency hopping is performed on ROs not belonging to a same slot using the frequency hopping step; or no frequency hopping is performed on ROs belonging to a plurality of adjacent slots in the RO group, or frequency hopping is performed on ROs not belonging to a plurality of adjacent slots using the frequency hopping step. In other words, it can be ensured that preambles in a same slot or adjacent slots experience a same (close) channel and phase jump, and frequency hopping may be performed on preamble sequences in different slots or non-adjacent slots.

In other words, in this embodiment of this application, whether frequency hopping needs to be performed on the RO may be determined in one or more of the following four manners (rules).

First, when ROs for a same SSB (that is, ROs in a same RO group) are not all in a same slot (that is, distributed in a plurality of slots), no frequency hopping is performed on all ROs in a same slot. In other words, no frequency hopping is performed on ROs in a same slot, and a plurality of ROs in a same slot correspond to a same frequency domain position. Frequency hopping is performed normally in other cases.

Second, when ROs for a same SSB (that is, ROs in a same RO group) are not all in a same slot (that is, distributed in a plurality of slots), frequency hopping is performed on all ROs in a slot relative to ROs in a previous slot using a same step (ensuring that frequency domain positions of ROs in a same slot are the same), where the "slot" is not adjacent to the "previous slot". In other words, no frequency hopping is performed on ROs in a same slot, and a plurality of ROs in a same slot correspond to a same frequency domain position. Frequency hopping is performed normally in other cases.

Third, when ROs for a same SSB (that is, ROs in a same RO group) are not all inside adjacent slots, no frequency hopping is performed on ROs in adjacent slots. In other words, ROs in a plurality of adjacent slots correspond to a same frequency domain position. Frequency hopping is performed normally in other cases.

Fourth, when ROs for a same SSB (that is, ROs in a same RO group) are not all inside adjacent slots, frequency hopping is performed on all ROs in adjacent slots relative to ROs in a previous group of adjacent slots using a same step (ensuring that frequency domain positions of ROs in adjacent slots are the same). Frequency hopping is performed normally in other cases.

After it is determined that frequency hopping needs to be performed, a frequency domain position S of the (i+1)^{th} RO in the RO group after frequency hopping may also be determined according to the foregoing formula (1) or formula (2). For details, refer to the foregoing descriptions of the formula (1) or the formula (2). For brevity, details are not described herein again.

It should be understood that in this embodiment of this application, in a possible implementation, the RO frequency hopping manner in the RO group may be predefined in a protocol, for example, a plurality of different frequency hopping patterns (frequency hopping manners) may be predefined in the protocol, and the terminal device and the network device may store these frequency hopping patterns. In this case, the network device may send indication information to the terminal device, where the indication information indicates an identifier of the RO frequency hopping pattern in the RO group. The terminal device may determine the RO frequency hopping pattern in the RO group based on the identifier of the RO frequency hopping manner in the RO group, to determine the time-frequency positions of the ROs in the RO group based on a mapping relationship between the SSB and the RO, RO group information (for example, the quantity of ROs and a start RO position) indicated by the network device, the determined frequency hopping pattern (which may also be referred to as a frequency hopping manner, including the frequency hopping step), and the like.

In another possible implementation, the network device may send indication information to the terminal device, where the indication information may indicate the frequency hopping step. The terminal device determines the time-frequency positions of the plurality of ROs in the RO group based on the indication information, the frequency hopping step, and the frequency hopping manner (that is, performing no frequency hopping on ROs belonging to a same slot in the RO group, or performing frequency hopping on ROs not belonging to a same slot using the frequency hopping step; or performing no frequency hopping on ROs belonging to a plurality of adjacent slots in the RO group, or performing frequency hopping on ROs not belonging to a plurality of adjacent slots using the frequency hopping step) and with reference to a mapping relationship between the SSB and the RO, RO group information (for example, the quantity of ROs and a start RO position) indicated by the network device, and the like. Optionally, in this case, the foregoing rule for determining whether to perform frequency hopping on the RO in the RO group may be predefined in a protocol.

Optionally, if the network device indicates the frequency hopping step by sending the indication information to the terminal device, a length of the indication information may be 3 bits (bit), 2 bits (bit), or 1 bit (bit).

When the indication information sent by the network device indicates the frequency hopping step, for the length of the indication information, refer to the foregoing descriptions related to the length of the indication information. For brevity, details are not described herein again.

According to the transmission method provided in this application, for a plurality of ROs in a same RO group, one slot or a plurality of adjacent slots are used as a frequency hopping granularity, no frequency hopping is performed on ROs in a same slot or adjacent slots (the ROs correspond to a same frequency domain position), and frequency hopping is performed on ROs in different slots or non-adjacent slots. Preambles in a same slot or adjacent slots experience a same (close) channel and phase jump. Therefore, after the network device receives the preamble separately at the time-frequency positions of the plurality of ROs in the RO group, coherent combination may be first performed on preamble sequences in a same slot or adjacent slots (the adjacent slots correspond to close channels), and then a combined sequence is used for detection, to improve a preamble detection success probability. Frequency hopping may be performed on preamble sequences in different slots or non-adjacent slots. Frequency hopping can reduce a probability that all channels for repeated preamble transmission are in deep fading (that is, not in deep fading). Therefore, a frequency diversity (diversity) gain can be improved. In other words, a frequency hopping gain and a coherent detection gain are combined. In addition, if the network device indicates the frequency hopping step by sending the indication information to the terminal device, the length of the indication information may be 2 bits (bit), 3 bits (bit), or 1 bit, so that the frequency hopping step is indicated with low signaling overheads, saving communication resources.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing method embodiments may be unnecessary, some steps may be newly added, or any two or more of the foregoing embodiments are combined. A modified, changed, or combined solution also falls within the scope of embodiments of this application.

It should be further understood that division of manners, cases, categories, and embodiments in embodiments of this application is merely intended for ease of description, and should not constitute a particular limitation. The features in the manners, categories, cases, and embodiments may be combined without contradiction.

It should be further understood that numerals used in embodiments of this application are merely distinguished for ease of description, but are not intended to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between embodiments. For same or similar parts that are not mentioned, refer to embodiments. For brevity, details are not described herein again.

The foregoing describes in detail the method in embodiments of this application with reference to FIG. 1 to FIG. 32. The following describes in detail a communication apparatus in embodiments of this application with reference to FIG. 33 to FIG. 37.

In embodiments, a terminal device and a network device may be divided into functional modules according to the foregoing methods. For example, each functional module may be obtained through division based on each corresponding function, or two or more functions may be integrated into one processing module. The integrated module may be implemented in a form of hardware. It should be noted that module division in embodiments is an example and is merely logical function division. During actual implementation, there may be another division manner.

It should be noted that related content of the steps in the foregoing method embodiments may be referenced to function descriptions of corresponding functional modules, and details are not described herein again.

The terminal device and the network device provided in embodiments of this application are configured to perform any transmission method provided in the foregoing method embodiments, and therefore can achieve same effects as the foregoing implementation method. When an integrated unit is used, the terminal device or the network device may include a processing module, a storage module, and a communication module. The processing module may be configured to control and manage an action of the terminal device or the network device, for example, may be configured to support the terminal device or the network device in performing a step performed by a processing unit. The storage module may be configured to support storage of program code, data, and the like. The communication module may be configured to support the terminal device or the network device in communicating with another device.

The processing module may be a processor or a controller, and may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, for example, a radio frequency circuit, a Bluetooth chip, or a Wi-Fi chip.

For example, FIG. 33 is a schematic block diagram of a communication apparatus 3300 according to an embodiment of this application. The communication apparatus 3300 may correspond to the terminal device described in the method 1400 and the method 2800, or may be a chip or a component used in the terminal device. In addition, modules or units in the communication apparatus 3300 are respectively configured to perform actions or processing processes performed by the terminal device in the method 1400 or the method 2800.

As shown in FIG. 33, the communication apparatus 3300 includes a processing module 3310 (or referred to as a processing unit 3310) and an interface module 3320 (or referred to as an interface unit 3320). The interface module 3320 is configured to perform specific signal receiving and sending under driving of the processing module 3310.

In some embodiments,
the interface module 3320 is configured to receive an SSB and PRACH resource configuration information.

The processing module 3310 determines time-frequency positions of a plurality of ROs in an RO group based on the SSB, the PRACH resource configuration information, and an RO frequency hopping manner in the RO group, where the RO group includes a plurality of ROs in time domain, the plurality of ROs in the RO group correspond to different time domain positions, and the RO frequency hopping manner in the RO group includes performing frequency hopping with an RO bundle as a frequency hopping granularity using a frequency hopping step, where the RO bundle includes a plurality of ROs in time domain, and the plurality of ROs in the RO bundle correspond to a same frequency position.

The interface module 3320 is further configured to send a preamble separately on the plurality of ROs in the RO group based on the time-frequency positions of the plurality of ROs in the RO group.

According to the communication apparatus provided in this embodiment of this application, when the preamble is sent separately (or the preamble is sent repeatedly) on the plurality of ROs in the RO group, frequency hopping is performed in the RO group with the RO bundle as the frequency hopping granularity (or a frequency hopping unit) using the frequency hopping step. The RO bundle may include a plurality of ROs in time domain, and the plurality of ROs in the RO bundle correspond to a same frequency position. After a communication apparatus receiving the preamble receives the preamble separately at the time-frequency positions of the plurality of ROs in the RO group, because preambles in one RO bundle experience a same (close) channel and phase jump, coherent combination may be first performed on preamble sequences transmitted on ROs in one RO bundle, where coherent combination can improve average power of a to-be-detected sequence; and then a combined sequence is used for detection, to improve a preamble detection success probability. Frequency hopping may be performed on preamble sequences transmitted on different RO bundles. Frequency hopping can reduce a probability that all channels for repeated preamble transmission are in deep fading (that is, not in deep fading). Therefore, a frequency diversity (diversity) gain can be improved. In other words, a frequency hopping gain and a coherent detection gain are combined.

In some possible implementations, the RO bundle corresponds to (belongs to) a same slot or a plurality of adjacent slots in time domain.

For example, the same slot or the plurality of adjacent slots may be understood as a same PRACH slot or a plurality of adjacent PRACH slots. The plurality of adjacent slots may be understood as that sequence numbers of the plurality of slots are adjacent or consecutive.

In some possible implementations, a quantity of ROs included in the RO bundle in time domain includes any one of 2, 3, 4, 5, 6, or 7. Alternatively, a quantity set or range of ROs included in the RO bundle in time domain is 2, 3, 4, 5, 6, and 7.

In some possible implementations, if a time domain resource occupied by an (i+1)^{th} RO in the RO group and a time domain resource occupied by an i^{th} RO in the RO group belong to a same slot or adjacent slots, the i^{th} RO and the (i+1)^{th} RO in the RO group correspond to a same frequency domain position, where a value of i is a positive integer; or if a time domain resource occupied by an (i+1)^{th} RO in the RO group and a time domain resource occupied by an i^{th} RO in the RO group do not belong to a same slot or do not belong to adjacent slots, frequency hopping is performed on the (i+1)^{th} RO in the RO group relative to the i^{th} RO based on the frequency hopping step. In this implementation, whether frequency hopping needs to be performed on the RO in the RO is determined in the foregoing manner, so that it can be ensured that no frequency hopping is performed on ROs in a same slot or a plurality of adjacent slots. In addition, frequency hopping needs to be performed on ROs in different slots or non-adjacent slots. In other words, it can be ensured that preambles in a same slot or adjacent slots experience a same (close) channel and phase jump. Therefore, coherent combination may be performed on preamble sequences in a same slot or adjacent slots (the adjacent slots correspond to close channels), to improve the preamble detection power. Frequency hopping may be performed on preamble sequences in different slots or non-adjacent slots, to improve the frequency diversity (diversity) gain and avoid deep fading.

In some other embodiments,
the interface module 3320 is configured to receive an SSB and PRACH resource configuration information.

The processing module 3310 determines time-frequency positions of a plurality of ROs in an RO group based on the SSB, the PRACH resource configuration information, and an RO frequency hopping manner in the RO group, where the RO group includes a plurality of ROs in time domain, and the plurality of ROs in the RO group correspond to different time domain positions; and the RO frequency hopping manner in the RO group includes: performing no frequency hopping on ROs belonging to a same slot in the RO group, or performing frequency hopping on ROs not belonging to a same slot using a frequency hopping step; or performing no frequency hopping on ROs belonging to a plurality of adjacent slots in the RO group, or performing frequency hopping on ROs not belonging to a plurality of adjacent slots using a frequency hopping step.

The interface module 3320 is further configured to send a preamble separately on the plurality of ROs in the RO group based on the time-frequency positions of the plurality of ROs in the RO group.

According to the communication apparatus provided in this embodiment of this application, when the preamble is sent separately (or the preamble is sent repeatedly) on the plurality of ROs in the RO group, no frequency hopping is performed on ROs belonging to a same slot in the RO group, or frequency hopping is performed on ROs not belonging to a same slot using the frequency hopping step; or no frequency hopping is performed on ROs belonging to a plurality of adjacent slots in the RO group, or frequency hopping is performed on ROs not belonging to a plurality of adjacent slots using the frequency hopping step. In other words, preambles in a same slot or adjacent slots experience a same (close) channel and phase jump. Therefore, after a network device receives the preamble separately at the time-frequency positions of the plurality of ROs in the RO group, coherent combination may be first performed on preamble sequences in a same slot or adjacent slots (the adjacent slots correspond to close channels), and then a combined sequence is used for detection, to improve a preamble detection success probability. Frequency hopping may be performed on preamble sequences in different slots or non-adjacent slots. Frequency hopping can reduce a probability that all channels for repeated preamble transmission are in deep fading (that is, not in deep fading). Therefore, a frequency diversity (diversity) gain can be improved. In other words, a frequency hopping gain and a coherent detection gain are combined.

In some possible implementations, the frequency hopping step includes an integer multiple of a frequency domain resource size occupied by one RO in frequency domain, and a value of the frequency hopping step includes any one of 1, 2, 3, 4, 5, 6, or 7.

In some possible implementations, if the time domain resource occupied by the (i+1)^{th} RO in the RO group and the time domain resource occupied by the i^{th} RO in the RO group do not belong to a same slot or do not belong to adjacent slots, a frequency domain position S of the (i+1)^{th} RO in the RO group after frequency hopping satisfies the following formula:
S = (the frequency domain position of the i^{th} RO in the RO group + a frequency domain resource length corresponding to the frequency hopping step) mod (a total frequency domain resource length for a plurality of frequency domain multiplexed ROs), where mod represents a modulo operation. In this implementation, efficiency and accuracy of determining the frequency domain position of the Ro after frequency hopping can be improved.

In some possible implementations, if the time domain resource occupied by the (i+1)^{th} RO in the RO group and the time domain resource occupied by the i^{th} RO in the RO group do not belong to a same slot or do not belong to adjacent slots, a frequency division multiplexing sequence number W of the (i+1)^{th} RO in the RO group after frequency hopping may be determined according to the following formula:
W = (a frequency division multiplexing sequence number of the i^{th} RO in the RO group + a quantity of ROs corresponding to the frequency hopping step) mod (a quantity of frequency domain multiplexed ROs), where mod represents a modulo operation, and the frequency division multiplexing sequence number indicates that a frequency position of a specific RO corresponds to which FDM-RO among all frequency division multiplexed ROs at a same time point. In this implementation, the efficiency and the accuracy of determining the frequency domain position of the Ro after frequency hopping can be improved.

In some possible implementations, the RO frequency hopping manner in the RO group is predefined in a protocol. For example, the frequency hopping step and a time-frequency resource size corresponding to the RO bundle are predefined in the protocol, or the frequency hopping step is predefined in the protocol.

In some possible implementations, the interface module 3320 is further configured to receive indication information, where the indication information indicates an identifier of the RO frequency hopping manner in the RO group. The processing module 3310 is further configured to determine the RO frequency hopping manner in the RO group based on the identifier of the RO frequency hopping manner in the RO group.

In some possible implementations, the interface module 3320 is further configured to receive indication information, where the indication information indicates at least one of the frequency hopping step or the time-frequency resource size corresponding to the RO bundle. The processing module 3310 is further configured to determine the RO frequency hopping manner in the RO group based on the indication information.

In some possible implementations, the indication information indicates the frequency hopping step, and a length of the indication information is 1 bit, 2 bits, or 3 bits. In this implementation, the frequency hopping step can be indicated with low signaling overheads, saving communication resources.

In some possible implementations, the length of the indication information is 1 bit, the indication information indicates performing frequency hopping using the frequency hopping step whose value is 1 or 7, or performing no frequency hopping, and the value of the frequency hopping step represents a multiple of the frequency domain resource size occupied by one RO in frequency domain. In this implementation, on one hand, the frequency hopping step can be indicated with low signaling overheads, and on the other hand, a high frequency diversity (diversity) gain can be obtained.

Further, the communication apparatus 3300 may further include a storage module (unit). The interface module (unit) 3320 may be a transceiver, an input/output interface, or an interface circuit. The storage unit is configured to store instructions executed by the interface module 1420 and the processing module 3310. The processing module 3310, the interface module 3320, and the storage unit are coupled to each other. The storage unit stores the instructions. The processing module 3310 is configured to execute the instructions stored in the storage unit. The interface module 3320 is configured to perform specific signal receiving and sending under driving of the processing module 3310.

It should be understood that for a specific process in which each unit in the communication apparatus 3300 performs the corresponding step, refer to the foregoing descriptions related to the terminal device with reference to related embodiments in the method 1400 and the method 2800. For brevity, details are not described herein again.

It should be understood that the interface module 3320 may be the transceiver, the input/output interface, or the interface circuit. The storage unit may be a memory. The processing module 3310 may be implemented by a processor.

FIG. 34 is a schematic block diagram of another communication apparatus 3400 according to this application. As shown in FIG. 34, the communication apparatus 3400 may include a processor 3410, a memory 3420, a transceiver 3430, and a bus system 3440. The components of the communication apparatus 3400 are coupled together by using the bus system 3440. In addition to a data bus, the bus system 3440 may further include a power bus, a control bus, a status signal bus, and the like. However, for clarity of description, various buses are marked as the bus system 3440 in FIG. 34. For ease of illustration, FIG. 34 is merely an example for illustration.

The communication apparatus 3300 shown in FIG. 33 or the communication apparatus 3400 shown in FIG. 34 can implement the steps performed by the terminal device in each embodiment of the method 1400 or the method 2800. For similar descriptions, refer to the descriptions in the foregoing corresponding methods. To avoid repetition, details are not described herein again.

It should be further understood that the communication apparatus 3300 shown in FIG. 33 or the communication apparatus 3400 shown in FIG. 34 may be a terminal device, or a terminal device may include the communication apparatus 3300 shown in FIG. 33 or the communication apparatus 3400 shown in FIG. 34.

It should be further understood that the terminal device in this application may alternatively be a chip, a chip system, a processor, or the like that supports the terminal device in implementing the method. This is not limited in embodiments of this application.

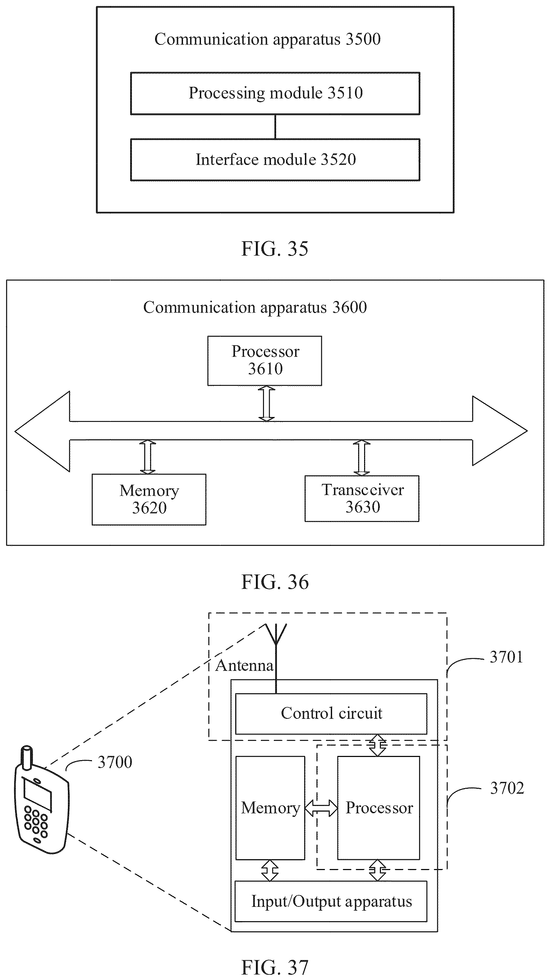

FIG. 35 is a schematic block diagram of a communication apparatus 3500 according to an embodiment of this application. The communication apparatus 3500 may correspond to the network device described in the method 1400 or the method 2800, or may be a chip or a component used in the network device. In addition, modules or units in the communication apparatus 3500 are respectively configured to perform actions or processing processes performed by the network device in the method 1400 or the method 2800.

As shown in FIG. 35, the communication apparatus 3500 may include a processing module 3510 and an interface module 3520. The interface module 3520 is configured to perform specific signal receiving and sending under driving of the processing module 3510.

In some embodiments,
the interface module 3520 is configured to send an SSB and PRACH resource configuration information.

The processing module 3510 is configured to determine time-frequency positions of a plurality of ROs in an RO group using an RO frequency hopping manner in the RO group, where the RO group includes a plurality of ROs in time domain, the plurality of ROs in the RO group correspond to different time domain positions, and the RO frequency hopping manner in the RO group includes performing frequency hopping with an RO bundle as a frequency hopping granularity using a frequency hopping step, where the RO bundle includes a plurality of ROs in time domain, and the plurality of ROs in the RO bundle correspond to a same frequency position.

The interface module 3520 is further configured to receive, separately on the plurality of ROs included in the RO group based on the time-frequency positions of the plurality of ROs in the RO group, a preamble in response to the SSB and the PRACH resource configuration information.

According to the communication apparatus provided in this embodiment of this application, when the preamble is received separately (or the preamble is received repeatedly) on the plurality of ROs in the RO group, frequency hopping is performed in the RO group with the RO bundle as the frequency hopping granularity (or a frequency hopping unit) using the frequency hopping step. The RO bundle may include a plurality of ROs in time domain, and the plurality of ROs in the RO bundle correspond to a same frequency position. Because preambles in one RO bundle experience a same (close) channel and phase jump, the network device may first perform coherent combination on preamble sequences transmitted on ROs in one RO bundle, where coherent combination can improve average power of a to-be-detected sequence; and then use a combined sequence for detection, to improve a preamble detection success probability. Frequency hopping may be performed on preamble sequences transmitted on different RO bundles. Frequency hopping can reduce a probability that all channels for repeated preamble transmission are in deep fading (that is, not in deep fading). Therefore, a frequency diversity (diversity) gain can be improved. In other words, a frequency hopping gain and a coherent detection gain are combined.

In some possible implementations, the RO bundle corresponds to (belongs to) a same slot or a plurality of adjacent slots in time domain.

In some possible implementations, a quantity of ROs included in the RO bundle in time domain includes any one of 2, 3, 4, 5, 6, or 7. Alternatively, a quantity set or range of ROs included in the RO bundle in time domain is 2, 3, 4, 5, 6, and 7.

In some possible implementations, if a time domain resource occupied by an (i+1)^{th} RO in the RO group and a time domain resource occupied by an i^{th} RO in the RO group belong to a same slot or adjacent slots, the i^{th} RO and the (i+1)^{th} RO in the RO group correspond to a same frequency domain position, where a value of i is a positive integer; or if a time domain resource occupied by an (i+1)^{th} RO in the RO group and a time domain resource occupied by an i^{th} RO in the RO group do not belong to a same slot or do not belong to adjacent slots, frequency hopping is performed on the (i+1)^{th} RO in the RO group relative to the i^{th} RO based on the frequency hopping step.

In some other embodiments,
the interface module 3520 is configured to send an SSB and PRACH resource configuration information.

The processing module 3510 is configured to determine time-frequency positions of a plurality of ROs in an RO group using an RO frequency hopping manner in the RO group, where the RO group includes a plurality of ROs in time domain, the plurality of ROs in the RO group correspond to different time domain positions, the RO group includes a plurality of ROs in time domain, and the plurality of ROs in the RO group correspond to different time domain positions; and the RO frequency hopping manner in the RO group includes: performing no frequency hopping on ROs belonging to a same slot in the RO group, or performing frequency hopping on ROs not belonging to a same slot using a frequency hopping step; or performing no frequency hopping on ROs belonging to a plurality of adjacent slots in the RO group, or performing frequency hopping on ROs not belonging to a plurality of adjacent slots using a frequency hopping step.

The interface module 3520 is further configured to receive, separately on the plurality of ROs included in the RO group based on the time-frequency positions of the plurality of ROs in the RO group, a preamble in response to the SSB and the PRACH resource configuration information.

According to the communication apparatus provided in this embodiment of this application, when the preamble is received separately (or the preamble is received repeatedly) on the plurality of ROs in the RO group, no frequency hopping is performed on ROs belonging to a same slot in the RO group, or frequency hopping is performed on ROs not belonging to a same slot using the frequency hopping step; or no frequency hopping is performed on ROs belonging to a plurality of adjacent slots in the RO group, or frequency hopping is performed on ROs not belonging to a plurality of adjacent slots using the frequency hopping step. When the preamble is received separately on each RO in this manner, because preambles in a same slot or adjacent slots experience a same (close) channel and phase jump, coherent combination may be performed on preamble sequences in a same slot or adjacent slots (the adjacent slots correspond to close channels), to improve preamble detection power. Frequency hopping may be performed on preamble sequences in different slots or non-adjacent slots, to improve a frequency diversity (diversity) gain and avoid deep fading.

In some possible implementations, the frequency hopping step includes an integer multiple of a frequency domain resource size occupied by one RO in frequency domain, and a value of the frequency hopping step includes any one of 1, 2, 3, 4, 5, 6, or 7.

In some possible implementations, if the time domain resource occupied by the (i+1)^{th} RO in the RO group and the time domain resource occupied by the i^{th} RO in the RO group do not belong to a same slot or do not belong to adjacent slots, a frequency domain position S of the (i+1)^{th} RO in the RO group after frequency hopping satisfies the following formula:
S = (the frequency domain position of the i^{th} RO in the RO group + a frequency domain resource length corresponding to the frequency hopping step) mod (a total frequency domain resource length for a plurality of frequency domain multiplexed ROs), where mod represents a modulo operation. In this implementation, efficiency and accuracy of determining the frequency domain position of the Ro after frequency hopping can be improved.

In a possible implementation of the first aspect or the second aspect, if the time domain resource occupied by the (i+1)^{th} RO in the RO group and the time domain resource occupied by the i^{th} RO in the RO group do not belong to a same slot or do not belong to adjacent slots, a frequency division multiplexing sequence number W of the (i+1)^{th} RO in the RO group after frequency hopping may be determined according to the following formula:
W = (a frequency division multiplexing sequence number of the i^{th} RO in the RO group + a quantity of ROs corresponding to the frequency hopping step) mod (a quantity of frequency domain multiplexed ROs), where mod represents a modulo operation, and the frequency division multiplexing sequence number indicates that a frequency position of a specific RO corresponds to which FDM-RO among all frequency division multiplexed ROs at a same time point. In this implementation, the efficiency and the accuracy of determining the frequency domain position of the Ro after frequency hopping can be improved.

In some possible implementations, the RO frequency hopping manner in the RO group is predefined in a protocol. For example, the frequency hopping step and a time-frequency resource size corresponding to the RO bundle are predefined in the protocol, or the frequency hopping step is predefined in the protocol.

In some possible implementations, the interface module 3520 is further configured to send indication information, where the indication information indicates an identifier of the RO frequency hopping manner in the RO group. In this implementation, efficiency and accuracy of determining the RO frequency hopping manner in the RO group by the terminal device can be improved.

In some possible implementations, the interface module 3520 is further configured to send indication information, where the indication information indicates at least one of the frequency hopping step or the time-frequency resource size corresponding to the RO bundle. In this implementation, efficiency and accuracy of determining the RO frequency hopping manner in the RO group by the terminal device can be improved.

In some possible implementations, the indication information indicates the frequency hopping step, and a length of the indication information is 1 bit, 2 bits, or 3 bits. In this implementation, the frequency hopping step can be indicated with low signaling overheads, saving communication resources.

In some possible implementations, the length of the indication information is 1 bit, the indication information indicates performing frequency hopping using the frequency hopping step whose value is 1 or 7, or performing no frequency hopping, and the value of the frequency hopping step represents a multiple of the frequency domain resource size occupied by one RO in frequency domain. In this implementation, on one hand, the frequency hopping step can be indicated with low signaling overheads, and on the other hand, a high frequency diversity (diversity) gain can be obtained.

It should be understood that for a specific process in which each unit in the communication apparatus 3500 performs the corresponding step, refer to the foregoing descriptions related to the network device with reference to related embodiments in the method 1400 and the method 1800. For brevity, details are not described herein again.

Optionally, the interface module 3520 may include a receiving unit (module) and a sending unit (module), configured to perform steps of receiving information and sending information by the network device in each embodiment of the method 1400 or the method 2800.

Further, the communication apparatus 3500 may further include a storage unit. The interface module 3520 may be a transceiver, an input/output interface, or an interface circuit. The storage unit is configured to store instructions executed by the interface module 3520 and the processing module 3510. The interface module 3520, the processing module 3510, and the storage unit are coupled to each other. The storage unit stores the instructions. The processing module 3510 is configured to execute the instructions stored in the storage unit. The interface module 3520 is configured to perform specific signal receiving and sending under driving of the processing module 3510.

It should be understood that the interface module 3520 may be the transceiver, the input/output interface, or the interface circuit. The storage unit may be a memory. The processing module 3510 may be implemented by a processor. As shown in FIG. 36, a communication apparatus 3600 may include a processor 3610, a memory 3620, and a transceiver 3630.

The communication apparatus 3500 shown in FIG. 35 or the communication apparatus 3600 shown in FIG. 36 can implement the steps performed by the network device in each embodiment of the method 1400 or the method 2800. For similar descriptions, refer to the descriptions in the foregoing corresponding methods. To avoid repetition, details are not described herein again.

It should be further understood that the communication apparatus 3500 shown in FIG. 35 or the communication apparatus 3600 shown in FIG. 36 may be a network device, or a network device may include the communication apparatus 3500 shown in FIG. 35 or the communication apparatus 3600 shown in FIG. 36.

It should be further understood that the network device in this application may alternatively be a chip, a chip system, or a processor that supports the network device in implementing the method, or may be a logical node, a logical module, or software that can implement all or a part of functions of the network device.

It should be further understood that division into the units in the apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program invoked by a processing element of the apparatus to perform a function of the unit. The processing element herein may also be referred to as a processor, and may be an integrated circuit having a signal processing capability. In an implementation process, the steps in the method or the units may be implemented by using a hardware integrated logical circuit in a processor element, or may be implemented in a form of software invoked by the processing element.

In an example, the unit in any one of the foregoing apparatuses may be one or more integrated circuits configured to implement the foregoing methods, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these integrated circuit forms. For another example, when the unit in the apparatus is implemented in a form of scheduling a program by a processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SoC).

FIG. 37 is a diagram of a structure of a terminal device 3700 according to this application. The communication apparatus 3300 or the communication apparatus 3400 may be configured in the terminal device 3700. Alternatively, the communication apparatus 3300 or the communication apparatus 3400 may be the terminal device 3700. In other words, the terminal device 3700 may perform the actions performed by the terminal device in the method 1400 or the method 2800. Optionally, for ease of description, FIG. 37 shows only main components of the terminal device. As shown in FIG. 37, the terminal device 3700 includes a processor, a memory, a control circuit, an antenna, and an input/output apparatus.

The processor is mainly configured to: process a communication protocol and communication data, control the entire terminal device, execute a software program, and process data of the software program, for example, configured to support the terminal device in performing the actions described in the foregoing transmission method embodiments. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to: receive data input by a user and output data to the user.

After the terminal device is powered on, the processor may read the software program in the storage unit, interpret and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, via the antenna, a radio frequency signal in a form of an electromagnetic wave. When data is sent to the terminal device, the radio frequency circuit receives the radio frequency signal via the antenna, converts the radio frequency signal into a baseband signal, and outputs the baseband signal to the processor. The processor converts the baseband signal into data, and processes the data.

A person skilled in the art may understand that for ease of description, FIG. 37 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 37 integrates functions of the baseband processor and the central processing unit. A person skilled in the art may understand that alternatively, the baseband processor and the central processing unit may be independent processors, and interconnected by using technologies such as a bus. A person skilled in the art may understand that the terminal device may include a plurality of baseband processors to adapt to different network standards, and the terminal device may include a plurality of central processing units to enhance processing capabilities of the terminal device, and the components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have a receiving function and a sending function may be considered as a transceiver unit 3701 of the terminal device 3700, and the processor having a processing function may be considered as a processing unit 3702 of the terminal device 3700. As shown in FIG. 37, the terminal device 3700 includes the transceiver unit 3701 and the processing unit 3702. The transceiver unit may also be referred to as a transceiver, a transceiver machine, a transceiver apparatus, or the like. Optionally, a component configured to implement the receiving function in the transceiver unit 3701 may be considered as a receiving unit, and a component configured to implement the sending function in the transceiver unit 3701 may be considered as a sending unit. In other words, the transceiver unit 3701 includes the receiving unit and the sending unit. For example, the receiving unit may also be referred to as a receiver, a receive machine, or a receiving circuit, and the sending unit may also be referred to as a transmitter, a transmit machine, or a transmitting circuit.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not restrictive description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented using software, hardware, firmware, or any combination thereof. When software is used to implement embodiments, all or a part of the foregoing embodiments may be implemented in a form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

An embodiment of this application further provides a communication system. The communication system includes the foregoing terminal device and the foregoing network device.

An embodiment of this application further provides a computer-readable medium, configured to store computer program code. A computer program includes instructions used to perform the transmission method in embodiments of this application in the method 1400 or the method 2800. The readable medium may be a read-only memory (read-only memory, ROM) or a random access memory (random access memory, RAM). This is not limited in this embodiment of this application.

This application further provides a computer program product. The computer program product includes instructions. When the instructions are executed, a terminal device is enabled to perform an operation of the terminal device corresponding to the foregoing method, or a network device is enabled to perform an operation of the network device corresponding to the foregoing method.

An embodiment of this application further provides a system chip. The system chip includes a processing unit and a communication unit. The processing unit may be, for example, a processor. The communication unit may be, for example, an input/output interface, a pin, a circuit, or the like. The processing unit may execute computer instructions, so that a chip in a communication apparatus performs any transmission method provided in the foregoing embodiments of this application.

Optionally, any communication apparatus provided in embodiments of this application may include the system chip.

Optionally, the computer instructions are stored in a storage unit.

Optionally, the storage unit is a storage unit in the chip, for example, a register or a cache. Alternatively, the storage unit may be a storage unit that is in a terminal and that is located outside the chip, for example, a ROM or another type of static storage device that can store static information and instructions, or a RAM. The processor described above may be a CPU, a microprocessor, an ASIC, or one or more integrated circuits configured to control execution of a program for the foregoing transmission method. The processing unit and the storage unit may be decoupled, are disposed on different physical devices, and are connected in a wired or wireless manner to implement respective functions of the processing unit and the storage unit, to support the system chip in implementing various functions in the foregoing embodiments. Alternatively, the processing unit and the memory may be coupled to a same device.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not restrictive description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The terms "uplink" or "downlink" in this application is used to describe a data/information transmission direction in a specific scenario. For example, an "uplink" direction is usually a direction in which data/information is transmitted from a terminal to a network side, or a direction in which data/information is transmitted from a distributed unit to a central unit; and a "downlink" direction is usually a direction in which data/information is transmitted from a network side to a terminal, or a direction in which data/information is transmitted from a central unit to a distributed unit. It can be understood that "uplink" or "downlink" is merely used to describe the data/information transmission direction, without limiting a specific starting or ending device of data/information transmission.

In this application, names may be assigned to various objects such as messages/information/devices/network elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

A person of ordinary skill in the art may be aware that all or a part of the methods in embodiments of this application may be implemented by using software, hardware, firmware, or any combination thereof. When software is used to implement the method, all or a part of the method may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or other programmable apparatuses. The computer programs or the instructions may be stored in a computer-readable storage medium, or may be transmitted using the computer-readable storage medium. The computer-readable storage medium may be any usable medium accessible by the computer, or a data storage device, for example, a server, integrating one or more usable media.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, and may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The storage medium includes a USB flash drive, a removable hard disk drive, a read-only memory (read-only memory, ROM), or random access.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A transmission method, wherein the method comprises:
receiving an SSB and PRACH resource configuration information;
determining time-frequency positions of a plurality of ROs in an RO bundle based on the SSB and the PRACH resource configuration information, wherein the RO bundle comprises a plurality of ROs in time domain, the plurality of ROs in the RO bundle correspond to different time domain positions, and the plurality of ROs in the RO bundle correspond to a same frequency position; and
sending a preamble preamble separately on the plurality of ROs in the RO bundle based on the time-frequency positions of the plurality of ROs in the RO bundle.

2. The method according to claim 1, wherein the RO bundle corresponds to a same slot or a plurality of adjacent slots in time domain.

3. The method according to claim 1 or 2, wherein a quantity of ROs comprised in the RO bundle in time domain comprises any one of 2, 3, 4, 5, 6, or 7.

4. A transmission method, wherein the method comprises:
sending an SSB and PRACH resource configuration information;
determining time-frequency positions of a plurality of ROs in an RO bundle, wherein the RO bundle comprises a plurality of ROs in time domain, the plurality of ROs in the RO bundle correspond to different time domain positions, and the plurality of ROs in the RO bundle correspond to a same frequency position; and
receiving, separately on the plurality of ROs comprised in the RO bundle based on the time-frequency positions of the plurality of ROs in the RO bundle, a preamble preamble in response to the SSB and the PRACH resource configuration information.

5. The method according to claim 4, wherein the RO bundle corresponds to a same slot or a plurality of adjacent slots in time domain.

6. The method according to claim 4 or 5, wherein a quantity of ROs comprised in the RO bundle in time domain comprises any one of 2, 3, 4, 5, 6, or 7.

7. A transmission method, wherein the method comprises:
receiving an SSB and PRACH resource configuration information;
determining time-frequency positions of a plurality of ROs in an RO group based on the SSB, the PRACH resource configuration information, and an RO frequency hopping manner in the RO group, wherein the RO group comprises a plurality of ROs in time domain, the plurality of ROs in the RO group correspond to different time domain positions, and the RO frequency hopping manner in the RO group comprises performing frequency hopping with an RO bundle as a frequency hopping granularity using a frequency hopping step, wherein the RO bundle comprises a plurality of ROs in time domain, and the plurality of ROs in the RO bundle correspond to a same frequency position; and
sending a preamble preamble separately on the plurality of ROs in the RO group based on the time-frequency positions of the plurality of ROs in the RO group.

8. The method according to claim 7, wherein the RO bundle corresponds to a same slot or a plurality of adjacent slots in time domain.

9. The method according to claim 7 or 8, wherein a quantity of ROs comprised in the RO bundle in time domain comprises any one of 2, 3, 4, 5, 6, or 7.

10. The method according to any one of claims 7 to 9, wherein if a time domain resource occupied by an (i+1)^{th} RO in the RO group and a time domain resource occupied by an i^{th} RO in the RO group belong to a same slot or adjacent slots, the i^{th} RO and the (i+1)^{th} RO in the RO group correspond to a same frequency domain position, wherein a value of i is a positive integer; or
if a time domain resource occupied by an (i+1)^{th} RO in the RO group and a time domain resource occupied by an i^{th} RO in the RO group do not belong to a same slot or do not belong to adjacent slots, frequency hopping is performed on the (i+1)^{th} RO in the RO group relative to the i^{th} RO based on the frequency hopping step.

11. A transmission method, wherein the method comprises:
receiving an SSB and PRACH resource configuration information;
determining time-frequency positions of a plurality of ROs in an RO group based on the SSB, the PRACH resource configuration information, and an RO frequency hopping manner in the RO group, wherein the RO group comprises a plurality of ROs in time domain, and the plurality of ROs in the RO group correspond to different time domain positions; and
the RO frequency hopping manner in the RO group comprises: performing no frequency hopping on ROs belonging to a same slot in the RO group, or performing frequency hopping on ROs not belonging to a same slot using a frequency hopping step; or
performing no frequency hopping on ROs belonging to a plurality of adjacent slots in the RO group, or performing frequency hopping on ROs not belonging to a plurality of adjacent slots using a frequency hopping step; and
sending a preamble preamble separately on the plurality of ROs comprised in the RO group based on the time-frequency positions of the plurality of ROs in the RO group.

12. The method according to any one of claims 7 to 11, wherein the frequency hopping step comprises an integer multiple of a frequency domain resource size occupied by one RO in frequency domain, and a value of the frequency hopping step comprises any one of 1, 2, 3, 4, 5, 6, or 7.

13. The method according to any one of claims 7 to 12, wherein if the time domain resource occupied by the (i+1)^{th} RO in the RO group and the time domain resource occupied by the i^{th} RO in the RO group do not belong to a same slot or do not belong to adjacent slots, a frequency domain position S of the (i+1)^{th} RO in the RO group after frequency hopping satisfies the following formula:
S = (the frequency domain position of the i^{th} RO in the RO group + a frequency domain resource length corresponding to the frequency hopping step) mod (a total frequency domain resource length for a plurality of frequency domain multiplexed ROs), wherein the value of i is a positive integer, and mod represents a modulo operation.

14. The method according to any one of claims 7 to 13, wherein the method further comprises:
receiving indication information, wherein the indication information indicates an identifier of the RO frequency hopping manner in the RO group; and
determining the RO frequency hopping manner in the RO group based on the identifier of the RO frequency hopping manner in the RO group.

15. The method according to any one of claims 7 to 13, wherein the method further comprises:
receiving indication information, wherein the indication information indicates at least one of the frequency hopping step or a time-frequency resource size corresponding to the RO bundle; and
determining the RO frequency hopping manner in the RO group based on the indication information.

16. The method according to claim 15, wherein the indication information indicates the frequency hopping step, and a length of the indication information is 1 bit, 2 bits, or 3 bits.

17. The method according to claim 15 or 16, wherein the length of the indication information is 1 bit, the indication information indicates performing frequency hopping using the frequency hopping step whose value is 1 or 7, or performing no frequency hopping, and the value of the frequency hopping step represents a multiple of the frequency domain resource size occupied by one RO in frequency domain.

18. A transmission method, wherein the method comprises:
sending an SSB and PRACH resource configuration information;
determining time-frequency positions of a plurality of ROs in an RO group using an RO frequency hopping manner in the RO group, wherein the RO group comprises a plurality of ROs in time domain, the plurality of ROs in the RO group correspond to different time domain positions, and the RO frequency hopping manner in the RO group comprises performing frequency hopping with an RO bundle as a frequency hopping granularity using a frequency hopping step, wherein the RO bundle comprises a plurality of ROs in time domain, and the plurality of ROs in the RO bundle correspond to a same frequency position; and
receiving, separately on the plurality of ROs comprised in the RO group based on the time-frequency positions of the plurality of ROs in the RO group, a preamble preamble in response to the SSB and the PRACH resource configuration information.

19. The method according to claim 18, wherein the RO bundle corresponds to a same slot or a plurality of adjacent slots in time domain.

20. The method according to claim 18 or 19, wherein a quantity of ROs comprised in the RO bundle in time domain comprises any one of 2, 3, 4, 5, 6, or 7.

21. The method according to any one of claims 18 to 20, wherein if a time domain resource occupied by an (i+1)^{th} RO in the RO group and a time domain resource occupied by an i^{th} RO in the RO group belong to a same slot or adjacent slots, the i^{th} RO and the (i+1)^{th} RO in the RO group correspond to a same frequency domain position, wherein a value of i is a positive integer; or
if a time domain resource occupied by an (i+1)^{th} RO in the RO group and a time domain resource occupied by an i^{th} RO in the RO group do not belong to a same slot or do not belong to adjacent slots, frequency hopping is performed on the (i+1)^{th} RO in the RO group relative to the i^{th} RO based on the frequency hopping step.

22. A transmission method, wherein the method comprises:
sending an SSB and PRACH resource configuration information;
determining time-frequency positions of a plurality of ROs in an RO group using an RO frequency hopping manner in the RO group, wherein the RO group comprises a plurality of ROs in time domain, the plurality of ROs in the RO group correspond to different time domain positions, the RO group comprises a plurality of ROs in time domain, and the plurality of ROs in the RO group correspond to different time domain positions; and
the RO frequency hopping manner in the RO group comprises: performing no frequency hopping on ROs belonging to a same slot in the RO group, or performing frequency hopping on ROs not belonging to a same slot using a frequency hopping step; or
performing no frequency hopping on ROs belonging to a plurality of adjacent slots in the RO group, or performing frequency hopping on ROs not belonging to a plurality of adjacent slots using a frequency hopping step; and
receiving, separately on the plurality of ROs comprised in the RO group based on the time-frequency positions of the plurality of ROs in the RO group, a preamble preamble in response to the SSB and the PRACH resource configuration information.

23. The method according to any one of claims 18 to 22, wherein the frequency hopping step comprises an integer multiple of a frequency domain resource size occupied by one RO in frequency domain, or a quantity of ROs, and a value of the frequency hopping step comprises any one of 1, 2, 3, 4, 5, 6, or 7.

24. The method according to any one of claims 18 to 23, wherein if the time domain resource occupied by the (i+1)^{th} RO in the RO group and the time domain resource occupied by the i^{th} RO in the RO group do not belong to a same slot or do not belong to adjacent slots, a frequency domain position S of the (i+1)^{th} RO in the RO group after frequency hopping satisfies the following formula:
S = (the frequency domain position of the i^{th} RO in the RO group + a frequency domain resource length corresponding to the frequency hopping step) mod (a total frequency domain resource length for a plurality of frequency domain multiplexed ROs), wherein the value of i is a positive integer, and mod represents a modulo operation.

25. The method according to any one of claims 18 to 24, wherein the method further comprises: sending indication information, wherein the indication information indicates an identifier of the RO frequency hopping manner in the RO group.

26. The method according to any one of claims 18 to 24, wherein the method further comprises: sending indication information, wherein the indication information indicates at least one of the frequency hopping step or a time-frequency resource size corresponding to the RO bundle.

27. The method according to claim 26, wherein the indication information indicates the frequency hopping step, and a length of the indication information is 1 bit, 2 bits, or 3 bits.

28. The method according to claim 26 or 27, wherein the length of the indication information is 1 bit, the indication information indicates performing frequency hopping using the frequency hopping step whose value is 1 or 7, or performing no frequency hopping, and the value of the frequency hopping step represents a multiple of the frequency domain resource size occupied by one RO in frequency domain.

29. A communication apparatus, comprising a unit configured to perform each step of the method according to any one of claims 1 to 3 or 7 to 17, or a unit configured to perform each step of the method according to any one of claims 4 to 6 or 18 to 28.

30. A communication apparatus, comprising at least one processor and an interface circuit, wherein the at least one processor is configured to perform the method according to any one of claims 1 to 3 or 7 to 17, or the method according to any one of claims 4 to 6 or 18 to 28.

31. A terminal device, comprising the communication apparatus according to claim 29 or 30.

32. A network device, comprising the communication apparatus according to claim 29 or 30.

33. A computer-readable storage medium, wherein the computer-readable storage medium stores a computer program or instructions, and when a computer reads and executes the computer program or the instructions, the computer is enabled to perform the method according to any one of claims 1 to 3 or 7 to 17, or the method according to any one of claims 4 to 6 or 18 to 28.

34. A chip, comprising a processor, configured to invoke a computer program from a memory and run the computer program, so that a communication device on which the chip is installed performs the method according to any one of claims 1 to 3 or 7 to 17, or the method according to any one of claims 4 to 6 or 18 to 28.
